# EUROPEAN PATENT APPLICATION

(11) **EP 3 905 149 A1**
(43) Date of publication of application: **03.11.2021**
(21) Application number: 21170869.8
(22) Date of filing: 28.04.2021
(51) Int. Cl.: G06Q 10/00, G06Q 10/02, G06Q 10/10, G06Q 50/10, G06Q 50/18

(54) **AUTOMATED GENERATION AND MAINTENANCE OF VIRTUAL AGENTS**

(30) Priority: 28.04.2020 US 202016861206; 13.08.2020 US 202063065468 P; 12.01.2021 US 202163136566 P; 03.03.2021 US 202117191555
(71) Applicant: Directly, Inc., San Francisco, CA 94107 (US)
(72) Inventor: Todd, Jason, Boise, 83702 (US); Ozdemir, Sinan, Boise, 83702 (US); Abdullah, Shayaan Ahmad, Boise, 83702 (US)
(74) Representative: Mollekopf, Gerd Willi

(57) **Abstract**

Issues relating to the setup and maintenance of virtual agents have been, to a substantial degree, resolved through the use of a dynamically adaptable knowledge graph. The knowledge graph is rapidly produced by organizing conversation statements into a multi-level hierarchy of clusters. Each of these clusters is associated with a node of the knowledge graph, and edges between the nodes represent the orders in which statements may be made in a conversation with a virtual agent. Maintenance and refinement of the knowledge graph is greatly simplified by monitoring virtual agent performance at a node specific level and employing human agents to moderate changes at individual nodes. With this approach, the performance of a virtual agent can be constantly improved by targeted human intervention. The virtual agent can even adapt in real-time to changing conditions and needs. For example, nodes of the knowledge graph may be quickly and automatically adapted to the introduction of a new product or discovery of a new customer issue. As is discussed further herein, a substantial improvement in the generation, maintenance and performance of virtual agents is achieved through a judicious and groundbreaking combination of machine learning and human augmentation.

## Description

### BACKGROUND

### Field of the invention

The invention is in the field of customer support and/or automated communication systems.

### Related Art

Typical customer service systems include a contact center configured to communicate with customers by voice, chat, video, text, e-mail, social media, and/or other channels. These systems often include a series of questions that are presented to a customer and configured to identify the customer's needs. For example, a customer calling to a contact center may be asked to enter numbers on their phone to route the call to a specific group of service personnel. The customer is typically placed in a queue and then transferred to the next available service person. Such contact centers are expensive to establish and maintain.

Recently, automated virtual agents (VA) have been used to assist with customer communications. While these virtual agents can be helpful in guiding a customer through a set of predetermined questions, they typically perform poorly when customer responses fall outside of a very limited number of acceptable pre-coded responses. Virtual agents are also notoriously difficult to setup and maintain.

### SUMMARY

The long standing issues relating to the setup and maintenance of virtual agents have been, to a substantial degree, resolved through the use of a dynamically adaptable knowledge graph. The knowledge graph is rapidly produced by organizing conversation statements into a multi-level hierarchy of clusters. Each of these clusters is associated with a node of the knowledge graph, and edges between the nodes represent the orders in which statements may be made in a conversation with a virtual assistant. Maintenance and refinement of the knowledge graph is greatly simplified by monitoring virtual agent performance at a node specific level and employing human agents to moderate changes at individual nodes. With this approach, the performance of a virtual agent can be constantly improved by targeted human intervention. The virtual assistant can even adapt in real-time to changing conditions and needs. For example, nodes of the knowledge graph may be quickly and automatically adapted to the introduction of a new product or discovery of a new customer issue. As is discussed further herein, a substantial improvement in the generation, maintenance and performance of virtual agents is achieved through a judicious and groundbreaking combination of machine learning and human augmentation.

The invention is defined in claim 1. Particular embodiments are set out in the dependent claims.

Some embodiments of the invention include systems for and methods utilizing a multi-dimensional knowledge graph to support a conversational response management system. The knowledge graph optionally includes nodes associated with clusters of statements (e.g., messages and message responses). The knowledge graph is multi-dimensional in that the nodes can be traversed via multiple paths; each path being mapped to a sequence of statements that form a conversation.

The knowledge graph is optionally adapted to providing automated messages in response to customer service inquiries and/or other communications. In such embodiments, a customer service system may use the knowledge graph to engage in an automated conversation with a customer. As discussed elsewhere herein, this system may have features configured for detecting errors in the knowledge graph, adapting the knowledge graph to handle new inquiries or circumstances, and/or allowing human experts to engage in automated conversations when desirable. Statements within a conversation can include text messages, audio, video, images, commands, state information, metadata, data, and/or any other information that may be communicated between two entities or systems.

Various embodiments of the invention include systems for and methods of generating and/or maintaining a knowledge graph. The generation of the knowledge graph is optionally based on historical conversations, e.g., previous conversations between customers and (human or virtual) customer service agents/assistants. The knowledge graph generation may take place in two phases: 1) generation of a preliminary knowledge graph based on historical conversations and 2) refinement of the preliminary knowledge graph using input received from experts. Once generated a knowledge graph may be further refined and updated using additional input received from experts.

Maintenance of a knowledge graph is optionally performed on a continuous basis in which the knowledge graph is updated, improved, and/or adapted in real-time. In such embodiments, poorly performing nodes of the knowledge graph are automatically identified. Once poorly performing nodes are identified, experts and/or other resources discussed herein may be used to identify and make improvements to these nodes. This approach allows specific node and/or groups of nodes to be updated without requiring reconstruction of the entire graph. It also allows adaptation of the graph to changing conditions. For example, if a new product or service is introduced or if a new problem arises with an existing product or service, the performance at a specific node or group of nodes can be quickly updated in response to this change. Because the identification of problem nodes can be automatic, the knowledge graph is updated on a continuous, as needed basis. Performance feedback and expert facilitated updates result in a dynamic, self-correcting, and self-healing system that is continuously optimized despite changing demands.

Various embodiments of the invention include systems for and methods of providing improved customer service. These improved services may be achieved by resolving customer issues in several stages. For example, a first stage of resolving customer issues can include directing customers to expert mediated support content such as blogs and help pages. If this content is not sufficient to resolve an issue, a customer support inquiry may be processed in real-time by an automated virtual agent, one or more external experts, and/or by sending the customer support inquiry to a staffed contact center. An attempt to resolve an inquiry may be made using the external or internal experts prior to routing the inquiry to the contact center. These experts may be independent persons having experience or qualifications in the subject of the customer service inquiry. Optionally, customer service inquiries that are not resolved by an automated virtual agent and/or an expert are eventually forwarded to agents in an enterprise contact center.

Experts are managed by computing systems configured to determine which expert should receive a particular customer service inquiry, to determine which experts are currently available, to manage rewards, and/or to generate expert scores. Customer service inquiries are routed by the computing systems to establish communication channels between the expert and source of the service inquiry. These computing systems are thus configured via specific computing instructions to produce a specific purpose computing system.

In various embodiments, a customer service system is configured to provide customer support content to customers. The support content is provided based on a predictive model, a knowledge graph, and/or evaluation of the content by experts. The support content is selected based on an inquiry provided by a user and optionally a history or other characteristics of the user. The history can include resent web browsing activity.

In some embodiments, customer support content is provided in a window configured to receive the question from the user and to both use the question to select the customer support content and to send the question to a customer service system if the customer support content is not sufficient to resolve the question. In some embodiments, the experts of a customer service system are used to qualify and/or rate customer support content for use in answering specific questions or clusters of questions.

Various embodiments include a customer support system configured to automate customer service inquiries, the system comprising: an I/O configured to send a customer service inquiry to a customer service system, and to receive customer support content from the customer service system, the customer service system including both a customer service knowledge base configured to provide the customer support content and an expert management system configured to manage a plurality of experts; a parsing logic configured to determine one or more topic characteristics of the customer service inquiry; routing logic configured to route the customer service inquiry to a first human expert of the plurality of experts, the routing being based on an expertise of the human expert; content selection logic configured to select the customer support content based on one or more topic characteristics; display logic configured to display one or more links and a text input field, to the customer, the links being to the selected customer support content, the text input field being configured to receive the customer service inquiry from the customer and to send the customer service inquiry to the human expert; and control logic configured to provide the customer support content to the display logic prior to providing the customer service inquiry to the routing logic.

Various embodiments include a customer method of providing customer support, the method comprising: receiving a request for customer service from a customer; presenting the customer a service request interface, the request interface including a text entry field; detecting entry of text in the text entry field, the text including a customer service inquiry; selecting customer support content based on the entered text; presenting links to the selected customer support content to the customer in the customer service request interface; and receiving a request from the customer to send the customer service inquiry to an expert management system configured to manage a plurality of experts, after presenting the links to the customer in the customer service request interface.

Various embodiments of the invention include a customer support system comprising: a conversation storage configured to store a conversation, the conversation comprising an ordered exchange of messages between at least one customer and response management system; parsing logic configured to parse the messages and identify topic characteristics of the message; cluster logic configured to assign the messages to different clusters, the different clusters being included in a knowledge graph of the clusters, paths within the knowledge graph having an order of clusters corresponding to the ordered exchange of messages, an axis of the knowledge graph corresponding to clusters associated with different subject matter; response logic configured to provide automated responses to the customer as answers to customer messages, the responses being associated with the clusters and being selected by navigating between clusters of the knowledge graph based on messages received from the customer; an I/O configured to communicate the messages between the at least one customer and the response management system; and a processor configured to execute at least the cluster logic or the response logic.

Various embodiments of the invention include a method of training a customer support system, the method comprising: receiving a plurality of customer support conversations, each of the conversations including an ordered exchange of messages between at least one customer and a support management system; parsing each of the messages to identify subject matter of the messages; assigning at least some of messages to members of a plurality of clusters based on the subject matter, each of the plurality of clusters being associated with a node in a knowledge graph; and determining paths between the nodes based on an order of the messages in the plurality of conversations.

Various embodiments of the invention include a method of processing a customer service request, the method comprising: receiving a customer message from a customer; parsing the customer message to identify a subject matter of the message; assigning the message to a next cluster based on the subject matter, the next cluster being one of a plurality of alternative clusters connected to a current cluster by paths in a knowledge graph of clusters; navigating along the path from the current cluster to the next cluster along one of the paths; and extracting a support message from the next cluster and providing the support message to the customer in response to the customer message to create a conversation including ordered messages between the customer and a response management system.

Various embodiments of the invention include a knowledge graph generation system comprising: a I/O configured to receive a plurality of historical conversations including statements received from and sent to one or more customers; storage configured to store the historical conversations; optional scoring logic configured to generate a measure of success of the received conversations; optional parsing logic configured to identify an intent of each of the conversations or subparts thereof; cluster logic configured to identify clusters of statements within the plurality of historical conversations stored in the conversation storage; graph generation logic configured to generate a knowledge graph based on the identified clusters of statements and the historical conversations, each of the clusters represented by a node of the knowledge graph, each node of the knowledge graph being associated with a statement and one or more responsive statement; and a processor configured to execute at least the graph generation logic.

Various embodiments of the invention include a customer support system comprising: a I/O to receive statements from a customer and to send responsive statements to the customer; storage configured to store a knowledge graph and a current conversation, the current conversation including statements received from and sent to one or more customers, most recent statement received from the customer, a state of the conversation including nodes traversed, the knowledge graph including a plurality of nodes and edges connecting the nodes, each node of the knowledge graph being associated with a statement and one or more responsive statement; response logic configured to generate a conversation between the customer and the customer support system, the conversation being based on navigation of the knowledge graph in response to statements received from the customer; scoring logic configured to generate a measure of success of the conversation generated using the knowledge graph, the measure of success being associated with a node or group of nodes within the knowledge graph; evaluation logic configured to send the node or group of nodes associated with the measure of success(e.g., poorly performing nodes) to a human expert, responsive to the measure of success; updating logic configured to receive a node update to the knowledge graph from the human expert and to update the knowledge graph using the node update; and a processor configured to execute at least the scoring logic, evaluation logic or updating logic.

Various embodiments of the invention include a method of developing a customer support knowledge graph, the method comprising: receiving a plurality of conversations between customer service agents and customers, each of the conversations including a sequence of statements provided by the customer service agents and customers; optionally classifying the conversations based on a measure of their success; optionally dividing the conversations or parts thereof into separate discussion intents; identifying clusters of statements within the conversation, (clusters can represent a single statement and response or a group of ordered statements and responses, clustering is optionally performed separately for each discussion topic; generating a knowledge graph based on the conversations and identified clusters of statements therein, each node of the knowledge graph representing a statement and each edge of the knowledge graph representing a responsive statement; testing the knowledge graph to identify one or more nodes of the knowledge graph that produce sub-standard results; providing the identified nodes to one or more experts for evaluation; receiving suggested improvements to the identified nodes from the one or more experts; and using the suggested improvements to update the knowledge graph.

Various embodiments of the invention include a method of maintaining a virtual agent, the method comprising: receiving a knowledge graph representing conversations between a virtual agent and customers, the knowledge graph including a network of nodes and edges between the nodes, each of the nodes being associated with a response to be sent from the virtual agent to the customers; receiving conversation outcomes, each the conversation outcomes including measures of success of a different member of the represented conversations at a plurality of the nodes in the knowledge graph; identifying nodes among the plurality of nodes having poor measures of success; selecting one or more expert for review of the identified nodes; providing the selected one or more expert with at least part of the conversations including the identified nodes; optionally providing the selected one or more expert with alternative changes to the identified nodes; receiving a node update to the identified nodes from the one or more expert; and using the node update to update the knowledge graph.

Various embodiments of the invention include a method of communicating using an automated virtual agent, the method comprising: optionally receiving a first statement from a customer, at a response management system; optionally parsing the first statement to determine an intent of the statement and/or to assign the first statement to a cluster of statements; optionally assigning the first statement to a top level node of a knowledge graph, the assignment being based on the determined intent or cluster assignment; navigate to a first intermediate node of the knowledge graph; extracting statement from the first intermediate node; providing the extracted statement to a customer; receiving response statement from the customer, the responsive statement being responsive to the extracted statement; selecting an exit edge of the first intermediate node based on the responsive statement and optionally a history of navigation through the knowledge graph; navigating to second intermediate node of the knowledge graph via the exit edge; extracting a further statement from the second intermediate node; and providing the further statement to the customer. Optionally, the step of selecting an exit edge is performed using a neural network associated with and/or trained for use specifically within the first intermediate node. Optionally, the step of selecting an exit edge is performed using a neural network trained specifically for selecting an exit edge of the first intermediate node based on the responsive statement received responsive to the extracted statement.

Various embodiments of the invention include a knowledge graph generation system comprising: an I/O configured to receive a plurality of historical conversations including statements received from and sent to one or more customers; conversation storage configured to store the historical conversations; cluster logic configured to identify multi-level clusters of statements requiring similar responses within the plurality of historical conversations; graph generation logic configured to generate a knowledge graph based on the identified clusters of statements and the historical conversations, each of the clusters represented by a node of the knowledge graph, each intermediate node of the knowledge graph being associated with a statement and one or more exit edges to additional nodes of the knowledge graph, the knowledge graph being configured for generation of a conversation by navigating between the nodes of the knowledge graph; and a processor configured to execute at least the graph generation logic.

Various embodiments of the invention include a customer support system comprising: an I/O to receive statements from a customer and to send responsive statements to the customer; storage configured to store a knowledge graph and a conversation, the current conversation including statements received from and sent to one or more customers, the knowledge graph including a plurality of nodes and edges connecting the nodes, each node of the knowledge graph being associated with a statement and one or more edges configured to navigate between the nodes; response logic configured to generate the conversation between the customer and the customer support system, the conversation being based on navigation of the knowledge graph in response to statements received from the customer; scoring logic configured to generate a measure of success of the conversation, the measure of success being associated with a node or group of nodes of the knowledge graph; evaluation logic configured to send the node or group of nodes associated with the measure of success to a human expert, responsive to the measure of success; updating logic configured to receive an update to the knowledge graph from the human expert and to update the knowledge graph using the node update such that at least one member of a set of responsive statements associated with the node or group of nodes being provide by a human expert and at least one member of the set of responsive statements being received from a historical conversation; and a processor configured to execute at least the scoring logic, evaluation logic or updating logic. The above customer support system is optionally combined with a graph generation system.

### BRIEF DESCRIPTION OF THE DRAWINGS

- FIG. 1: illustrates a customer support system including a knowledge graph, according to various embodiments of the invention.
- FIG. 2A: illustrates a path of a conversation through a knowledge graph, according to various embodiments of the invention.
- FIG. 2B: illustrates details of an intermediate node, according to various embodiments of the invention.
- FIG. 3: illustrates a method of processing a customer service inquiry, according to various embodiments of the invention.
- FIG. 4: illustrates methods of generating and maintaining a knowledge graph according to various embodiments of the invention.
- FIG. 5: illustrates methods of maintaining an automated customer response system, according to various embodiments of the invention.
- FIG. 6: illustrates methods of processing a customer service inquiry based on multi-level clusters, according to various embodiments of the invention.

### DETAILED DESCRIPTION

A conversation is an exchange between two or more entities, e.g., parties, which includes an ordered set of messages passed between the entities. These messages typically include text or audio, as in a chat conversation, but may include other types of data as discussed elsewhere herein. A conversation is distinguished by having an order in which the data is communicated, and relationships between the data. For example, a conversation may occur between a customer and a customer support system. The conversation may begin with receipt of a customer service inquiry from a customer and be followed by an ordered exchange of messages between the customer and the customer support system.

Each conversation includes a "sequence of statements" provided by the entities participating in the conversation. The sequence of statements can include, for example, questions and responsive answers, statements of facts, authentication information, requests for actions, actions, status information, images, metadata, commands, and/or any other type of information discussed herein. A conversation may be divided into logic subparts. For example, a conversation may include a discussion of how to reach a login page, a discussion of how to reset a password, and a discussion of how to pay off a balance. In some embodiments, these subparts or "snippets" are categorized by "intent." The intent represents the purpose or goal of the conversation or subpart. For example, part of a conversation may have an intent of resetting a password while another part of the conversation may have in intent of resetting a modem. Other examples of intent include making or changing a reservation, paying a bill, checking an account balance, obtaining a return authorization, placing an order, establishing a secure connection, or any other communication purpose. The statements of a conversation may be "sequenced" (e.g., ordered) over the entire conversation and/or within logic subparts. For example, in some cases two subparts may be performed in any order relative to each other while the statements included in each of the subparts are more strictly ordered.

Each conversation may be associated with one or more "measure of success." This measure is indicative of the desirability of an outcome of the conversation. Success may be associated an entire conversation, a subpart of a conversation (e.g., a subpart having an identifiable intent), and/or with an individual node of the knowledge graph. The measure of success may be based on customer feedback, a number of statements in a conversation, duration of a conversation, evaluation by an expert, specific affirmative phrases included in a conversation, receipt or delivery of desired information, completion of a conversation intent, a sale of a product or service, return of a product or service, a financial transaction, need for human intervention, a customer survey, a length of the conversation, a time to next contact with a customer of the conversation, one or more statements received from the customer during the first conversation, a product or service upsell, value of sale, satisfaction of an intent, and/or the like.

The systems and methods described herein are optionally directed toward the avoidance and/or resolution of customer service inquiries. For example, the systems and methods may be used to automatically provide pre-existing customer support content to a customer or to generate one or more responses to a customer service inquiry. The provision of pre-existing content, e.g., customer support content, may occur at any point in a conversation represented by a node of the knowledge graph described herein, and/or prior to sending a customer service inquiry (i.e., service ticket) to a customer service system. The customer service inquiry may be received directly from a customer or prospective customer ("a requester"). Alternatively, the customer service inquiry may be first communicated from a requester to a customer contact center (e.g., call center) and then forwarded from the contact center to the expert management systems and/or automated virtual agents described elsewhere herein. Alternatively, the customer service inquiry may be first communicated from a requester to an automated virtual agent, such as that described herein, and then forwarded a customer contact center or expert management system. For example, inquiries may be resolved by first routing the inquiries to an expert management system or automated virtual agent and then, if needed, the inquiries are routed to a contact center. The routing is optionally based on a rule set that is configured to reduce the number of inquiries received by the contact center while, at the same time, assuring minimum levels of response quality (e.g., success), response time, and/or customer satisfaction. These rules are optionally embodied in an expert system, knowledge graph, and/or trained artificial intelligence/neural network/machine learning system. Typically, resolving inquiries using the automated virtual agent is more cost effective than having the inquiries resolved by an expert management system or contact center. As used herein the term "machine learning system" is meant to include expert systems, artificial intelligence systems, artificial neural networks, Bayesian statistical processors, and/or the like. As used herein the term "customer" is meant to include customers, prospective customers and other constituents who may generate requests for help or information. A customer may be an entity seeking information. For example, a "customer" can be a person or a device that sends a request for information or a service. A "customer" may be an automated system asking for information, status, and/or other data. A "customer" may be an entity that makes a request of a service, such as an image processing or data analysis service.

Automated processing of customer service inquiries is generally more cost effective than sending them to a call center. In some embodiments, avoiding a service ticket can be accomplished by providing the customer with customer support content prior to sending an inquiry to the customer service system. For example, a customer can be presented with articles, blogs or other pre-existing forms of customer support content. The content may be selected based on actions of the customer and/or a question provided by the customer. The content may be rated and/or approved by experts as being suitable for answering specific customer questions and/or clusters thereof.

While a contact center is typically managed or under contract with a specific enterprise, experts managed by the expert management system can be independent persons having expertise in one or more topics. For example, an expert in a cellular telephone service may be an experienced user or a current/former employee of a telephone company. The plurality of experts forms a support and/or service community having a diverse range of expertise. Communication with experts may be via the internet and/or other communication service. For example, an expert may provide customer service via a personal computer, tablet computer, or cellular telephone. Communication between a requester and an expert can be via telephone, voice over Internet Protocol (VoIP), text session, video, e-mail, chat, Facetime®, mobile application, etc. Both requesters and experts are examples of "users" of the system.

Experts may be compensated via a variety of methods. In some embodiments, a person making the inquiry for service posts a reward. In some embodiments, a tip is paid to the expert by the person making the inquiry after an answer is provided. In some embodiments, an enterprise pays or provides funds for paying experts to resolve service inquiries, optionally before the inquiries reach a contact center. For example, a utility company may designate funds to be paid to experts that prevent calls from reaching the utility company's contact center, or paid to experts for working on inquiries initially submitted to the contact center. In some embodiments, experts are rewarded for contributing to improvements in a knowledge graph. For example, an expert may be rewarded for providing improved or new responsive message associated with a node of the knowledge graph. In some embodiments, most customer service inquiries are responded to using an automated virtual agent, and internal and/or external experts are used to provide responses to a small subset of the customer service inquiries and/or to provide updates to a knowledge graph used by the automated virtual agent. For example, an enterprise may employ a set of internal experts to update the knowledge graph and rely on the virtual agent to respond to customer service inquiries. The knowledge graph may be updated on at least a weekly, daily or hourly basis or on a continuous basis.

Certain terms are defined herein to have specific meanings. As these terms are used herein in the specification and claims, these terms are meant to be inherently limited by the definitions provided. Specifically, as used herein:
A "customer service inquiry" is defined as a request for help, assistance, support or any other type of service. Customer service inquiries can include technical service, sales service, advice, reviews, geographic directions, assembly directions, customer service, a product purchase, a request for information (e.g., data), and/or the like. Customer service inquiries may originate from a device, an individual or a business that wishes to know about, consumes or potentially consumes information, a product or service. Customer service inquiries are sometimes referred to herein as "service inquiries" or simply "inquiries" where the context may be referring to customer service inquiries. Inquiries may be requests for services or information. Customer service inquiries may be received from a web page or application including a text or other form field with which a customer can provide information (metadata) about their inquiry. For example, in various embodiments, customer service inquiries are received from a search field, a chat bot, a user interface presented in a webpage or application, and/or the like.

"Customer support content" is used herein to refer to articles, blog entries, manuals, specifications, Frequently Asked Question (FAQ) lists, message boards, and other documents of use in solving customer support issues. Customer support content can include frequently asked questions (FAQ) and answers. Customer support content is distinguished from automated answers in that customer support content is accessible outside of a conversation via a link, file transfer protocols, and/or a network (e.g., IP) address. In some embodiments, customer support content is accessible to customers by navigation through a website or support application. For example, an enterprise may have customer support content that includes blogs, web pages and lists of frequently asked questions. This content can be accessible and/or searchable via links of a website. Optionally, a customer is presented with a list of links to customer support content which they can access through a browser or dedicated help application. In some embodiments, customer support content outside of a conversation is accessed by supplying a link, Universal Resource Locator (URL), or other address via the conversation between a requestor and an automated virtual system. For example, a node in a knowledge graph may include means (e.g., an internet protocol address, a link or URL) for a requestor to access customer support content as one of a plurality of responsive statements. Customer support content may be generated and/or contributed to by experts.

A "requester" is a person, device, application, and/or enterprise that submits a customer service inquiry or other request using a communication device. For example, a requestor may initiate a conversation with a customer support system.

An "expert" is defined as a person that contributes to customer support content and/or makes him or herself available to provide responsive statements (e.g., answers) to customer service inquiries (e.g., customer statements). Alternatively, an expert may be a person that provides information that can be used to improve success of an automated virtual agent. For example, an expert may provide suggestions of preferred statements within a particular knowledge graph node or may provide suggestions as to edges between knowledge graph nodes. Experts can have different specialty characteristics, which denote topics in which the expert has expertise. In some embodiments, experts may have different levels of certification. For example, a "certified expert" may be one that is acknowledged by an enterprise to have specialty characteristics in the activities of that enterprise. In one embodiment, an airline certifies outside experts as having specialty characteristics in the airline's reservation system. A certified expert may be certified on the basis of having passed a test such as a language test or a technical skill test, and/or on the basis of having completed specific training. These experts may be former employees of the airline and/or have been trained by the airline. An internal expert is an enterprise employee or some other person that is provided with access to customer and/or account information that is generally not public. For example, if an enterprise is a bank, then an internal expert may be a contractor or employee to whom the bank has given access to selected customer account information, e.g., personally identifying information (PII) or other confidential data. In some embodiments, experts are call center employees. Experts may have different types of expertise. For example, some experts may have general knowledge and be qualified for troubleshooting and classifying a customer service inquiry, while other experts have specific knowledge and be qualified to answer a specific question.

A "knowledge graph" is a data structure comprising nodes and connections between the nodes. These connections are referred to as "edges" within the graph. Each node is associated with a cluster of messages that may be received from customers (or other entities) and optionally associated with one or more response message and/or action, the messages and response messages being examples of statements made in a conversation. Some response messages may be configured to further characterize a customer's need, while some response messages are configured to provide a definitive response (an answer that resolves the need). Connections between the nodes provide paths via which the knowledge graph can be navigated. Navigation from one node to another is typically dependent on messages and/or other information received from customers or results of actions. A path through the knowledge graph maps to an ordered sequence of statements forming a conversation between the customer and the customer support system. In some embodiments a knowledge graph includes three types of clusters: top level clusters configured for entry into the knowledge graph; intermediate clusters configured to identify needs of a customer; and leaf clusters associated with answers to customer needs. Experts may be assigned to specific nodes or sets thereof. As noted elsewhere herein, a knowledge graph may represent communications, e.g., "conversations," between a wide variety of alternative entities and is not necessarily restricted to conversations between customers and customer service systems. A path through the knowledge graph, e.g., a sequence of nodes, may represent an entire conversation or merely a snippet of a conversation having a common intent. The conversation or snippet is represented by the sequence of nodes. A snippet may represent less than 50, 25, 10, 5 or 1% of a conversation.

A "contact center" is defined as a facility populated by service personnel consisting of employees of an enterprise or employees of contractors to the enterprise for the purpose of responding to customer service inquiries. Contact centers may support one or more specific enterprises and normally have a set number of service personnel available to answer service inquiries at any given time. Contact centers may communicate with requesters by phone, chat, text, e-mail, and/or the like. The service personnel of a contact center may be directly or indirectly under the control of an enterprise that pays for the service personnel to answer service inquiries and control the contents of the answers provided. One example of a contact center is a traditional call center.

An "enterprise" is defined as a business or other organization that would normally receive customer service inquiries relating to products or services of the enterprise, or other types of inquiries. Examples of enterprises include corporations, product and service companies, application providers, professional organizations, political organizations, unions, non-profits, and/or academic or scientific institutions. Enterprises may have their own contact centers or may contract contact center services from third parties. In either case, the enterprises typically have control over the activities of contact center personnel. For example, the Enterprise will define answers to be given to specific questions. In some embodiments, an enterprise provides a cloud-based information service or an internet of things service accessible via a "conversation."

An "answer" is the content of a response to a customer service inquiry and is intended to resolve the inquiry, ask for explanation, or further details of the inquiry, and/or provide the requester with options relating to resolution of the inquiry. Answers may be provided as a "response message" or "responsive message" in a conversation. Answers are examples of statements that may be included in a conversation.

A "partial response" is a response to be modified and/or approved by a human expert. Partial responses can include, for example, templates for answers, suggested answer contents, answers that require filtering of personal information, answer outlines, answer suggestions, and/or the like. A partial answer includes an answer that requires further action by a human agent. For example, a partial response may be approved, edited, and/or otherwise modified by a human expert prior to being provided to a requestor. In contrast, a "complete response" is a response ready to be provided to a source of a customer service inquiry.

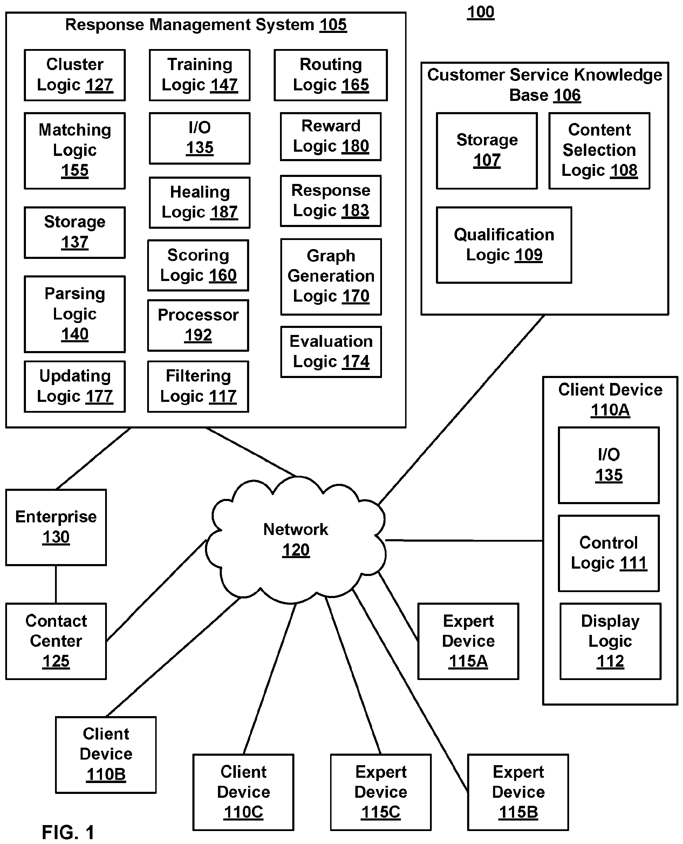

FIG. 1 illustrates a Customer Support System 100, according to various embodiments of the invention. Customer Support System 100 includes a Response Management System 105 configured to communicate with a Customer Service Knowledge Base 106, a plurality of Client Devices 110, and/or a plurality of Expert

Devices 115 via a Network 120. In some embodiments, Customer Support System 100 is configured to automatically communicate with Client Devices 110, and only require input from Expert Devices 115 when the automated responses are found to be inadequate or to improve the knowledge graph. Customer Support System 100 optionally further includes Customer Service Knowledge Base 106 configured to provide customer support content to Client Devices 110. In some embodiments, Customer Service Knowledge Base 106 is configured to reduce a number of customer service inquiries (i.e., support tickets) sent to Expert Devices 115 by providing customer support content that resolves customer support issues before other resources are employed to resolve the inquiries. Client Devices 110 and Expert Devices 115 are individually referenced as A, B, C, etc. The numbers of Client Devices 110 and Expert Devices 115 illustrated in FIG. 1 are for illustrative purposes. Typically, Customer Support System 100 is configured to service much larger numbers of Client Devices 110 and Expert Devices 115. Response Management System 105 is optionally further configured to communicate with a Contact Center 125 and/or an Enterprise 130. These communications optionally occur via Network 120.

Client Devices 110 are optionally the communication devices of a person sending a customer service inquiry. These communication devices can include, for example, a personal computer, a telephone, a cellular telephone, a tablet computer, a vending device, an interactive advertisement, a terminal, a point of sale system, a kiosk, and/or the like. Alternatively, Client Devices 110 may be automated devices of a customer. For example, Client Devices 110 may include an IoT device, a vehicle, a robot, a security device, a monitoring device, a medical device, and/or the like.

Client Devices 110 enable communication modes such as voice, text, e-mail, video, MMS (multi-media messaging), file transfer protocol, HTML, XML, a defined Application Programming Interface (API), and/or the like. Client Devices 110 are optionally configured to communicate through a web browser or API (Application Programming Interface). Client Devices 110 optionally include an application specifically configured for communicating with Response Management System 105 and/or Contact Center 125.

Expert Devices 115 are the communication devices of experts. Expert Devices 115 can include the same types of devices as discussed herein with respect to Client Devices 110. In some embodiments, an expert may have a plurality of different devices the expert uses to respond to and/or otherwise resolve customer service inquiries. For example, one expert may use a personal computer, a tablet computer and a cellular phone to communicate with Clients 110 and/or Response Management System 105. Expert Devices 115 optionally use a browser or custom application for this communication.

Network 120 is a communication network such as the Internet, a wide area network, a cellular network, a telephone network (POTS), a satellite network, a cable network, and/or the like. Network 120 may include wired and wireless segments.

Response Management System 105 includes an input/output (I/O) 135 configured to receive conversation statements and communicate with Contact Center 125, Client Devices 110 and Expert Devices 115. In various embodiments, I/O 135 is configured to communicate other information discussed herein, including but not limited to knowledge graphs, machine learning data, historical or current conversations, expert scores, measures of success, customer service content, metadata, commands, state information, and/or the like. Embodiments of I/O 135 can be found in any of the devices discussed herein.

I/O 135 may include a plurality of different devices, such as routers, firewalls, Ethernet ports, gatekeepers, switches, WiFi or Bluetooth transmission hardware, and/or the like. I/O 135 is configured to communicate via Network 120 and is typically configured to communicate via TCP/IP protocols, WiFi protocols, and/or cellular protocols. I/O 135 is optionally configured to communicate over a secure (e.g., encrypted) communication channel. The customer support inquiries received via I/O 135 may be received at a data warehouse form an ETL (Extract, Transform and Load) process, or alternatively received from a customer support export queue of Call Center 125. In some embodiments, I/O 135 is configured to facilitate communication of a conversation between a customer and Response Management System 105.

In some embodiments, instances of I/O 135 are included in Client Devices 110. These instances can include logic configured to present a customer service request interface to a customer, and to receive input from the customer via the customer service request interface. For example, I/O can be configured to communicate via Network 120 to Response Management System 105 and/or Customer Service Knowledge Base 106. This communication can include text entered by a user of Client Device 110A in a text field and/or content selection logic and links thereto.

Response Management System 105 optionally further includes a Storage 137. Storage 137 includes non-transient memory such as semiconductor memory, digital data storage, RAM (Random Access Memory), SRAM (Static RAM), DRAM (Dynamic RAM), data storage media, a hard drive, flash memory, an optical drive, etc. Storage 137 optionally further includes data structures specifically configured to store customer support inquiries. This data structure may be part of a database and/or data warehouse. As discussed further herein, Storage 137 is optionally configured to store a wide variety of information, including current or historical conversations, statements, inquiries, answers, response logs, routing data, expert profiles, knowledge graphs, and/or the like. Storage 137 may be based on a single device or distributed among a plurality of devices.

In some embodiments Storage 137 includes "conversation storage" configured to store a conversation comprising an ordered exchange of messages. A conversation can include, for example, an exchange of statements between a customer and one or more human expert and/or an exchange of statements between a customer and an automated part of Customer Support System 100. The messages exchanged typically include text, as in a chat session, but may also include other multimedia content such as video, audio and/or images. For example, a conversation may include an exchange of text messages and communication of images. In various embodiments, a conversation can include communication of single or multi-factor authentication data, status data from a device (e.g. a status data from an electronic device or a vehicle), location data, and/or the like. A conversation is characterized by temporal relationships between the exchanged messages, e.g., one comes before another. Although in conversations including more than two parties, messages may be included in separate threads and, thus, have both parallel and serial relationships with each other.

A conversation is optionally initiated by a customer inquiry received from a customer. For example, a customer may open a customer support ticket via a webpage or a mobile application. The customer inquiry may be accompanied by characteristics (conversation metadata) such as a customer location, a customer identifier, authentication data, serial numbers, model numbers, device identifiers, cookie data, a telephone number, an e-mail address, menu selections, inquiry history, and or the like. For example, a customer service inquiry may be generated when a customer fills out a support request form on a website. Questions on the form may include identification of a product or service, problems encountered, model or version numbers, frequently asked questions, error messages, and/or the like. As noted elsewhere herein, such characteristics of a customer inquiry may be used to determine a starting point and/or navigation of a conversation.

Response Management System 105 further includes a Parsing Logic 140 configured to parse received statements. Parsing Logic 140 includes computer implemented logic configured to automatically parse each statement, e.g., customer service inquiry, and determine one or more topic characteristics of the statement, without human analysis. Parsing Logic 140 includes hardware, firmware and/or software stored on a non-transient computer readable medium.

Topic characteristics are characteristics of a statement that are indicative of the topic(s) or intent(s) of the statement. In some cases, topic characteristics include an "intent" of a conversation. Topic characteristics may include what the statement is about, an intent of the statement, the meaning/point of the statement, language objects identified in the statement, grammatical objects, information regarding a source of the statement, metadata characterizing text within the statement, account information, keywords within the statement, and/or the like. Examples of topic characteristics include questions regarding specific software or hardware, business services, reservations, bill payment, account services, how to do something, medical questions, installation procedures, advice, appointments, professional recommendations, etc. Parsing Logic 140 is optionally configured to identify an intent of a conversation or subparts thereof. The "intent" of a statement can include a purpose or goal of a statement or sequence of statements (e.g., purpose of a snippet of a conversation). For example, an "intent" can be "to change a password," "to obtain an account balance," "to receive a device status or state," "to troubleshoot a device," "to make a purchase or return," "to schedule an appointment," or "to query a vehicle regarding a planned maneuver." A statement topic may characterize its intent and vice versa. Topics and intents may characterize a single statement or a sequence of statements in a conversation. In some embodiments, Parsing Logic 140 includes image or audio processing logic configured to process contents of an image or audio received as part of a conversation. For example, a conversation may include receiving an image and processing the image to determine a serial number, determine a device model, identify a person or object, identify a weapon or threat, identify an action, track an object, characterize vehicle damage, identify device settings, identify a location, and/or the like. Audio processing logic may be used to convert speech to text and vice versa.

In some embodiments, Parsing Logic 140 is configured to identify a source of the customer service inquiry and to infer topic characteristics of the service inquiry based on the identity of the source. For example, if a service inquiry arises from a member of Client Devices 110 that includes a kiosk in a retail store of a cellular telephone company, then Parsing Logic 140 can infer that the topic of the customer service inquiry is related to the cellular telephone company. In another example, if the customer service inquiry is received from a webpage hosted by an electronics retailer, then Parsing Logic 140 can infer that the topic of the customer service inquiry is related to the products of the electronics retailer, or to a specific product displayed on the webpage. In some embodiments, Parsing Logic 140 is configured to use a location of a member of Client Devices 110 as a topic characteristic. For example, if the customer service inquiry is received from Client Device 110A while Client Device 110A is located at a national park, then Parsing Logic 140 can infer that the topic of the inquiry related to that park. Parsing Logic 140 is optionally configured to use a universal resource locator (URL), internet domain, account, browser type, application type, and/or similar information regarding the customer service inquiry. For example, Parsing Logic 140 may use the identity of a web page or mobile application from which a customer service inquiry was received to select a natural language processing lexicon to be used in identifying topic characteristics of the inquiry.

Parsing Logic 140 optionally includes a natural language processing engine to determine one or more topic characteristics of a customer service inquiry. A lexicon used by the natural language processing engine may be selected based on a source of the customer service inquiry. The natural language processing engine is optionally configured to detect and interpret phrases as well as key words and phrases that pertain to the industry (i.e., "wireless"), company (i.e., "Verizon"), location (i.e., "California"), topic (i.e., "Downloading music"), device (i.e., "iPhone"), etc. Optionally, Parsing Logic 140 is configured to use natural language processing identify the "intent" of a conversation, or part thereof. As discussed elsewhere herein, the intent is an example of a topic characteristic and may include any purpose of the conversation.

In some embodiments, Parsing Logic 140 is configured to identify metadata within a customer service inquiry (e.g., characteristics of the service inquiry) and to assign particular meaning to data tagged by the metadata. For example, if the customer service inquiry is generated in Client Device 110B using a browser, the inquiry may include data entered in specific fields of a webpage configured to receive keywords such as model number, brands, serial numbers, topic identifiers, account numbers, login data, etc. The inquiry may include data characterizing a customer profile, a device type of Client Device 110B, a browser identity, an operating system identity, a source Universal Resource Locator (URL), a source Internet Protocol (IP) address, a source MAC address, a password, a security token or certificate, and/or the like. If a statement is received from a device, Parsing Logic 140 may be configured to identify device generated data included in the statement. Such data may include identifiers (e.g., Serial Number or model number), event logs, state data, connection status, expected actions, location data, sensor data, image data, audio data, and/or the like.

The location of an expert may be considered in determining if an expert is available to respond to a specific inquiry, when a specific location facilitates responding to the inquiry. For example, if a customer wishes advice on places to visit within a city the inquiry may specify an expert local to the city. The language of an expert may be considered in determining if an expert is available to respond to a specific inquiry. For example, an inquiry may require communication in a specific language or translation between languages. An expert may be considered available responsive to labor laws that apply to a location of the expert.

In some embodiments, Response Management System 105 is configured to receive and store an availability schedule from an expert. The availability schedule includes time during which the expert is available, unavailable and/or on standby. The condition of standby indicates that the expert is not currently available but could become available upon request. For example, an expert may be moved from a standby state to an available state in response to real-time demand. The change in state optionally includes sending a message to a device of the expert, e.g., Expert Device 115A, asking that the expert make ready to respond to inquiries in real-time. As demand changes, the expert may be placed back on standby. Such changes may be on a relatively short time scale, e.g., less than 10, 30 or 60 minutes, and are optionally not associated with a traditional multi-hour work shift. This allows the system to respond to changes in demand in real-time. In one illustrative example, an airline stewardess trained in reservations may be moved from a standby to an available status for a short time between flights, in response to a high demand. Moving from standby to active optionally includes moving the expert from a queue of experts on standby.

In some embodiments, an expert is assigned one or more scores. Expert scores are based on one or more of the following: a) time taken to provide an initial response to customer service inquiries, b) time taken to resolve customer service inquiries, c) feedback from requesters of customer service inquiries, d) ratings by fellow experts, e) contribution to generation and/or maintenance of a knowledge graph, and f) cooperation with fellow experts. For example, in some embodiments, a person making a customer service inquiry is asked to rate the quality of the response received from an automated virtual agent or a particular expert. The quality can include factors such as speed of response, helpfulness, resolution of a problem, completion of a conversation intent, and/or the like. In some embodiments, a fraction of responses to customer service inquiries made by an expert or an automated virtual agent are sent to fellow experts for their review of the quality of the responses. The assigned score can be based on ratings received from a requester, apparent satisfaction of conversation "intent" (e.g., was a product purchased, reservation made, or troubleshooting completed satisfactorily) and fellow expert ratings.

In some embodiments, an expert is assigned a score for contribution to a knowledge graph. For example, an expert may be asked to provide statements or select between candidate statements for the improvement of a knowledge graph node. A score may then be assigned based on the quality of the contribution of the expert. The quality may be measured by other experts agreeing with the contribution (e.g., consensus among experts) or by future performance of the note in generating successfully automated conversations.

Cooperation with fellow experts includes working with fellow experts to respond to a customer service inquiry, and referring customer service inquiries to other experts. A single customer service inquiry may be resolved by more than one expert in cooperation, or by one or more expert and an automated virtual agent. For example, a problem involving a computer and a software application may be cooperatively solved by an expert having expertise on the computer and an expert having expertise on the software application. A first expert may refer a customer service inquiry to a second expert if the inquiry would be better resolved by the second expert. For example, if a first expert on airline reservations receives a customer service inquiry that would be better handled by a second expert on frequent flyer programs, then the first expert may forward the inquiry to the second expert. If, as optionally determined by the second expert, the forwarding was appropriate; the first expert may be rewarded by an improvement in expert score. In another example, a customer service inquiry may first be responded to by an automated virtual agent and then, depending on received statements, passed to an expert knowledgeable about an issue that the automated virtual agent cannot handle.

An expert score may include a general component and a component that is specific to different topics. Thus, and expert might have a better score in one topic relative to another topic. An expert may have a high score in motorcycle maintenance and a low score in computer networking.

In some embodiments, experts are classified, e.g. as "internal experts" and "external experts." Generally, an internal expert is an expert that is under the control of an organization such as Enterprise 130. Examples of internal experts include call center (e.g., Contact Center 125) staff, retired employees, off-duty employees, and/or the like. Generally, an external expert is an expert that is not under direct control of the organization. An external expert may be compensated based on posted rewards, which may be specific to a particular customer service inquiry. In contrast internal experts are more likely to be compensated at a fixed rate ($/answer or $/hr). Thus, internal and external experts may receive different rewards for answering a customer service inquiry. In some embodiments, only internal experts are expected to contribute to the maintenance and/or improvement of knowledge graphs.

Typically, internal experts are authorized to receive a greater amount of customer information relative to external experts. For example, internal experts may be authorized to access confidential financial data, account numbers, social security numbers, medical information, order history, customer data (telephone number, address, name, etc.), and/or the like, while external experts are not thus authorized. Internal experts may also be authorized to take actions for which external experts are not authorized. For example, an internal expert may be authorized to give a customer credit, to authorize a payment, to make a reservation, to accept an order, to electronically access a customer's device, and/or the like. The classification of experts need not be binary. For example, there can be multiple levels of expert authorization and/or capabilities. The authorization of an expert may be specified by an organization (e.g., Enterprise 130) to whom a customer service inquiry is directed, or may be specified by a third-party certification process. Such authorization may be made based on training and/or certification of the expert.

In some embodiments, an automated virtual agent is authorized/configured to receive a greater amount of information than an expert. For example, the automated virtual agent may be authorized to receive confidential information or PII (personal identifying information), which experts are not authorized to receive. A conversation can include communication of statements including confidential information between a customer and an automated virtual agent, and statements lacking this confidential information between the customer and an expert.

Response Management System 105 optionally further includes Cluster Logic 127. Cluster logic 127 is configured to determine if a statement, e.g., a message in a customer service inquiry, is a member of a cluster of customer service requests. "Clusters" are groups of statements having similar topics and/or requiring similar responses. Such clusters are optionally associated with a specific node or edge of a knowledge graph. For example, a cluster of customer service inquiries may all be associated with a password change or with an account balance request. The information used to determine if a particular customer service inquiry is a member of a cluster includes, for example, a source of the customer service inquiry, images within the customer service inquiry, metadata associated with the customer service inquiry, and/or text within the customer service inquiry. In addition, Cluster logic 127 optionally attempts to obtain a greater understanding of the content a customer service inquiry, relative to Parsing Logic 140. For example, Cluster Logic 127 may employ a natural language processor to obtain a more accurate understanding of the text within a customer service inquiry or may consider a message as being part of a conversation. For example, in a conversation including the exchange:
*customer*: "how do I connect my modem";
*customer support system*: "Can you tell me if the power light is ON on the front of your modem?";
*customer*: "yes",
the customer's message *"yes"* will be interpreted in the context of the prior contents of the conversation. At a particular node in the knowledge graph the state of a conversation may be considered in determining a next node to which to navigate.

In some embodiments, Cluster Logic 127 is configured to identify clusters of statements made in a plurality of historical conversations (e.g., conversations that took place in the past and were stored in Storage 137). In these embodiments, Cluster Logic 127 may identify groups of statements that have similar meaning or intent. For example, the statements "What is my account balance?" "How much is in my checking?" and "How much is in my account?" may all be assigned to a same cluster because they represent different ways of asking for the same information. Optionally, Cluster Logic 127 is configured to identify clusters of statements within subsets of a plurality of historical conversations having a common intent. Historical conversations or snippets thereof) having a comment intent may be used to separately construct and/or train a knowledge graph for a specific purpose related to that intent. For example, conversations having an intent of making a reservation may be used to build and train a first knowledge graph while conversations having an intent of getting an account balance may be used to build and train a second knowledge graph.

Cluster Logic 127 can include a trained machine learning system, e.g., a neural network or artificial intelligence system. This machine learning system is optionally trained using prior inquiries and responses (conversations) as described elsewhere herein. In some embodiments, Cluster Logic 127 is configured to identify new clusters in which statements can be included or grouped. This identification can be based on customer service inquiries and/or responses to these inquiries. For example, if a number of inquiry responses include instructions on cancelling a reservation or subscription, then Cluster Logic 127 may examine the customer service inquiries that resulted in these inquiry responses and identify characteristics of the inquiries that can be used to categorize them into a cluster. In some embodiments, a new cluster identified by Cluster Logic 127 must be approved by an internal or external expert prior to use in classifying additional customer service inquiries.

Identification of a new cluster optionally includes addition of a new node to a knowledge graph. A new cluster may be required to logically fit within a specific node of a knowledge graph. For example, it may be required to be preceded by a conversational path that logically leads to that cluster. In a specific example, a cluster regarding cancellation of a reservation may logically be preceded by a cluster related to identification of the reservation. Categorization into clusters may, thus, take place with respect to a state of a conversation, prior navigation of the current conversation within the knowledge graph, and/or prior nodes previously visited in the current conversation.

Cluster Logic 127 is optionally configured to identify clusters of statements in historical conversations that have been categorized by "intent." For example, a group of historical conversations received from an airline may include a subset (e.g., snippet) related to changing reservations, a subset related to lost baggage and a subset related to pet policies. Each of these subsets may be separately considered for the identification of clusters related to the corresponding intent.

In some embodiments, Cluster Logic 127 is configured to assign received statements to clusters in a multi-dimensional knowledge graph of nodes, each node associated with one of a plurality of clusters. In this case, a multi-layer set of clusters is mapped to a multi-dimensional knowledge graph. This knowledge graph optionally having at least one dimension of time (ordered sequence) and one or more dimensions of subject matter. Paths from one cluster (or node) to another cluster represent an order of clusters corresponding to an ordered exchange of statements (e.g., a conversation). Assignment to a cluster, and corresponding node, is based on content or subject of the received statement/message and the content and/or subject matter of the cluster/node.

In some embodiments, Cluster Logic 127 is configured to generate multi-layer clusters from sequenced data. For example, from sequenced statements made in a plurality of conversations. In this case, clusters may be made of the initial top-level statement in the conversations, then of the various statements that follow each cluster of top-level statements. The clusters of top-level statements are associated with top-level nodes and clusters of intermediate-level statements are associated with intermediate-level nodes, etc. This process may be continued at each exchange of statements within the conversations. Optionally, the number of clusters and nodes at each layer is limited in order to keep their number from growing exponentially as the conversations progress. Such limits may include letting an intermediate-level node follow multiple preceding nodes, e.g., letting nodes having multiple entry edges. In the knowledge graph this is represented by the presence of multiple input edges to a particular node. In various embodiments, the growth in the number of clusters and corresponding nodes in each successive level of a graph is limited to a fixed limit, to a fixed total per level or graph, to a fixed percentage, and/or the like. When conversations include multiple intents, e.g., resetting a password and making a reservation, Cluster Logic 127 may be used to process the statements associated with each intent separately to generate defined groups of multi-level clusters, each group being associated with a specific intent.

The knowledge graph may include some nodes, e.g., nodes associated with top-level clusters, configured for entry into navigation of the knowledge. Examples, of the response messages (to be sent to a Client Device 110) associated with top-level clusters include: "I understand you would like to change your reservation. Do you have a reservation number?"; "I'm here to help you install your modem, can you provide the serial number on the back?"; "Which account balance would you like?"; "Is there a reason for your return"; and "How can I help you with your reservation?"

The knowledge graph may include some nodes, e.g., intermediate nodes, configured to identify needs of a customer. For example, intermediate nodes may be associated with questions (responsive messages) to be sent to a customer to troubleshoot or further identify a problem they are having. For example, "Would you like to change your reservation or cancel it completely?"; "Is the 'connected' light on the front of your modem flashing?"; "What does the error message say?"; "Do you know what version of windows you have?"; and "When did you start coughing?". In some embodiments, a node may be associated with a statement that includes an action in addition to or instead of a responsive message. For example, a statement may include a command configured to control the device of a customer. The command is optionally sent directly from the customer support system to the device of a customer. This communication can be via a communication channel different from one used to communicate between the customer and the customer service system. In another example, an automated action can include sending or receiving data or commands to or from a remote device. From a customer service system, a first communication channel may be used to exchange text messages with a customer via their computing device or smartphone and a second communication channel may be used to send commands and receive data between the customer service system and the device of the customer (e.g., modem, TV, etc.), as part of the same conversation. In a specific example, an automated action could include sending a command configured for restarting a customer's modem, reading a modem status or measuring a response time of the modem. In another example, a command could be used to obtain data from a medical patient monitoring device during a conversation with a medical caregiver. The device of the customer may include any IoT (Internet of Things) or network connected devices such as a home security system, medical devices, an electronic lock, a remote camera, a television, a climate control system, a vehicle, an entertainment device, an electronic product, a smart speaker (e.g., Google Home Voice Controller or Amazon Echo), a robot, a home appliance, a lighting system, and/or the like.

The structure of a particular node may vary in alternative embodiments. For example, in some embodiments, an intermediate node may have one or more entry edges via which the node may be reached. The node may be associated with a first statement to be sent to another party in the conversation. Finally, the node may be associated with a plurality of exit edges each leading to a different subsequent node of the knowledge graph, each of the subsequent nodes being associated with a further statement to be sent. As is discussed further elsewhere herein, selection of one of the exit edges (e.g., using Response Logic 182), for navigation to a next node, may be based (at least in part) on a response received in response to sending the first statement.

The knowledge graph may include some nodes, e.g., leaf nodes, configured to provide a solution to a customer issue and/or conclusion of a conversation. For example, leaf nodes may include responsive messages such as: "Please return your purchase to Big Shot Returns, 123 Main St. San Francisco, CA 94000, be sure to include return authorization number 123456"; "Is there anything else we can help you with?"; "Your reservation has been updated, your new schedule is ...."; and "Your modem is confirmed to have a hardware error, a replacement will be sent to you within 24 hours."

Ideally, a conversation starts at a top-level node, proceeds along a path via one or more intermediate notes and concludes at a leaf node. Each of these nodes being associated with respective clusters. A conversation need not take a linear path through the knowledge graph. For example, in the process of troubleshooting, a negative or positive result may suggest backtracking to previously traversed nodes, in such a case, an updated state of the conversation may result in new messages (e.g., questions) being sent to a customer. In some embodiments, a conversation may leave (and optionally return to) the structure of a knowledge graph to obtain real-time input from an expert or to access a customer service knowledge base. In these embodiments, a statement may include a link or command invoking the action.

Response Management System 105 optionally further includes Matching Logic 155 configured to match customer service inquiries to human experts. The matching is optionally based on at least a score of one of the human experts and a correlation between the topic characteristics of the inquiry (e.g., as determined by Parsing Logic 140) and the specialty characteristics of the human expert. The expert score considered in matching is optionally specific to the topic characteristics and/or cluster of the inquiry. For example, an expert may have a plurality of scores associated with different clusters of customer service inquiries, e.g., relatively higher scores related to computer networking as compared to spider identification. As such the matching performed by Matching Logic 115 can be dependent on assignment of customer service inquiries to particular clusters. Response Management System 105 is optionally further configured to match inquiries and experts based on the availability of the experts. For example, if a customer service inquiry is to be resolved in real-time, then only those experts currently available are considered for matching. Matching Logic 155 may be configured to match inquiries to internal and/or external experts.

Matching Logic 155 is optionally configured to match a plurality of experts to a customer service inquiry. These experts may be ranked, for example, in order from best match to less favorable match. As is described further elsewhere herein, the customer service inquiry may be initially offered to the first ranked expert, and if not resolved later offered to a second ranked expert. In some embodiments, a requester can choose between two or more matched experts, or can select a plurality of experts to answer an inquiry in parallel.

In various embodiments, Matching Logic 155 is configured to match the inquiry based on a request for a specific human expert (e.g., an expert used by the requester in the past), to match based on a topic characteristic identified by a second human expert, and/or to match based on a referral by a second human expert. In some embodiments, Matching Logic 155 is configured to match the customer service inquiry to a second human expert based on an unsatisfactory answer received from the first human expert. In some embodiments, Matching Logic 155 is configured to match the inquiry to internal or certified experts from different third parties in parallel (e.g., based on two or more different topics characteristics of the customer service inquiry matching complementary specialty characteristics of the experts).

Matching Logic 155 is optionally configured to match one or more experts to one or more nodes of the knowledge graph disclosed herein. For example, an expert familiar with managing reservations may be matched to nodes/clusters related to that topic. The match means that the expert may be called upon to manage these nodes, to approve response messages associated with these nodes, to review messages associated with nodes not performing well, to adapt messages associated with nodes as circumstances change, and/or the like. For example, if a node is not performing at least a minimum performance threshold (e.g., minimum measure of success), an assigned expert may be asked to review conversations involving that node and suggested changes in the clustering of customer messages and/or in the contents of responsive messages associated with the node. In some embodiments, an expert may further manually modify the connections/paths between nodes. In some embodiments, an expert may be asked to indicate a preference between alternative statements at a particular node. Changes to a node are optionally based on consensus between a plurality of experts regarding preferred statements associated with the node.

Response Management System 105 further includes Scoring Logic 160 optionally configured to calculate expert scores and to associate these scores with the corresponding experts. As discussed elsewhere herein, scores are based, for example, on the historical performance of an expert. Typically, the data used to calculate the score for an expert include both feedback from other experts and feedback from customers whose customer service inquiries have been handled by the expert. Scores may be specific to specific topics. As such one expert may have several different expert scores for different topics (specialty characteristics). Scores are optionally further calculated based on certification and/or official status of an expert. In some embodiments, Scoring Logic 160 is configured to calculate scores for groups of experts, such as expert teams. Scores may be calculated based on an expert's contribution to nodes of a knowledge graph.

In some embodiments Scoring Logic 160 is configured to generate a measure of success (e.g., a score) of a conversation generated using the knowledge graph. For example, consider a node having a statement "Would you like help logging in?" to be sent to a client and several alternative exit edges to be to be selected based on a response from the client. A first of the exit edges leading to a node associated with "Is your computer plugged in?"; a second of the exit edges leading to a node associated with "Do you remember your username?"; and a third exit edge leading to a node associated with "Have you set up an account?". Scoring Logic 160 may generate a low measure of success for the statement "Is your computer plugged in?" because it is unlikely to result in an efficient resolution of the intent of the conversation. This measure of success can be associated with a specific statement, a specific exit edge, a node to which an exit edge leads, a specific node, and/or group of nodes within the knowledge graph.

As noted herein, Scoring Logic 160 may be configured to calculate the measure of success or score based on a wide variety of criteria. For example, in various embodiments, a measure of success may be based on feedback from other experts, feedback from customers, successful conclusion of an intent of a conversation, sale of a product, a successful return, successful troubleshooting, obtaining desired information, and/or the like. A measure of success for a conversation is optionally based on statistical results of success of one or more nodes of the knowledge graph. Scoring Logic 160 may be configured to calculate the measure of success of just part of a conversation. For example, the measure of successes may represent success of a snippet of a conversation represented by less than 50, 25, 10, 5 or 1% of the nodes in a conversation or knowledge graph.

A measure of success is optionally a relative measure configured to compare alternative statements, nodes or groups of nodes. For example, relative measures of success may be used for A/B testing of alternatives variations of a knowledge graph. Specifically, relative measures of success of different versions of a responsive statement, node or group of nodes, generated by Scoring Logic 160, may be used to determine preferred elements of the knowledge graph. Scoring Logic 160 is optionally configured to generate a relative measure of success based on statistical results of success over a plurality of conversations. In some embodiments, Scoring Logic 160 is configured to generate relative success measures of different responsive statements associated with a particular node of the knowledge graph. In this case the score may represent which responsive statement is best at a particular node.

Measurements of success are optionally generated by Scoring Logic 160 in real-time. For example, Scoring Logic 160 may be configured to detect unexpected changes in success of a statement, node, or group of nodes. As such, a measure of success that drops on a short timescale may be indicative of changing circumstances. In a specific example, if a new product is released, which requires different setup steps relative to prior products, the measure of success for nodes of an existing knowledge graph may decline. This may trigger a real-time evaluation of the nodes in question, as discussed elsewhere herein.

Response Management System 105 further includes Routing Logic 165 configured to route customer service inquiries to experts matched to the inquiries by Matching Logic 155. In some embodiments, Routing Logic 165 is configured to route the customer service inquiry to one of Expert Devices 115 and then further communication related to resolution of the inquiry occurs directly between the one of Expert Devices 115 and the originating member of Client Devices 110 (e.g., the member of Client Devices from which the inquiry originated). In some embodiments, Routing Logic 165 is configured to route the customer service inquiry to one of Expert Devices 155 and then route a response from the one of Expert Devices 115 back to the originating member of Client Devices 110. In these embodiments, Routing Logic 165 may route multiple communications between these devices to resolve a customer service inquiry.

In various embodiments, Routing Logic 165 is configured to route customer service inquiries to more than one expert (associated with more than one of Expert Devices 115). This can occur in various ways. For example, a customer service inquiry may be routed to different experts in a serial manner if an automated virtual agent, a first expert, and/or set of experts, is unable to provide a satisfactory resolution for a customer service inquiry. The lack of a satisfactory resolution may be determined by the originator of the inquiry (requester) and/or by an elapsed time. A customer service inquiry may be routed to different experts in a serial manner if a first expert (or set of experts) refers the inquiry to a second expert. The second expert may take over responsibility for resolving the inquiry alone, or may work with the first expert to jointly resolve the inquiry. In one example, a response(s) produced by one set of experts may be given to a second set of experts for rating or to provide further input. Optionally, separate responses to an inquiry are provided by different sets (e.g., teams or groups) of experts. Routing Logic 165 is optionally configured to automatically route a service inquiry to one or more experts if an automated virtual agent is unable to provide at least a predetermined minimal measure of success. Such routing may occur at a top, intermediate or leaf node of a knowledge graph.

In various embodiments, Routing Logic 165 is configured to route a customer service inquiry to more than one expert and/or automated virtual agent in parallel. As used herein, "parallel" routing means that the customer service inquiry is sent to a second expert without regard to whether a response (to the same inquiry) has been received from a first expert. This approach is optionally used to assure that at least one expert responds to the inquiry in a timely manner. For example, a customer service inquiry may be routed in parallel to several different experts identified by Matching Logic 155. The expert that responds first to the inquiry is then optionally assigned responsibility for responding to the inquiry, and the opportunity to respond to the inquiry is then typically withdrawn from other experts. In some embodiments, multiple customer service inquiries are sent to one expert and the expert has the opportunity to select which one he or she is best suited to respond to. In some embodiments, an inquiry is presented to multiple experts in parallel and one or more of these experts can respond to the inquiry. The multiple experts may be notified of more than one inquiry in parallel and each of the experts can then choose which one (or more) of the inquiries to respond to.

Routing Logic 165 is optionally configured to route customer service inquiries to Contact Center 125. This can occur, for example, if an expert refers the service inquiry to Contact Center 125, if an expert is unable to resolve an inquiry to a requester's satisfaction, if an inquiry is not resolved within a predetermined time period, if no expert having needed specialty characteristics is available, if topic characteristics of the inquiry require confidential account data not available to experts, if an automated virtual agent is unable to achieve a minimal measure of success, and/or the like. In some embodiments, Routing Logic 165 is configured to route a customer service inquiry to Contact Center 125 if Enterprise 130 reports that there are currently unused service personnel at Contact Center 125. For example, if Enterprise 130 has an instance of Contact Center 125 including 30 service personnel that represent a sunk cost, then Enterprise 130 may wish to use these personnel rather than pay a cost of having the customer service inquiry sent to one of Expert Devices 115. Likewise, Routing Logic 165 may be configured to avoid routing customer service inquiries to Contact Center 125 at time that Enterprise 130 reports that no contact center service personnel are available. Routing Logic 165 may be configured to avoid routing customer service inquiries to Contact Center 125 that are originally received from requestors via Contact Center 125.

In some embodiments, Routing Logic 165 (or Matching Logic 155) is configured to consider a customer service inquiry (including content, requester profile, requester activity, expert activity, etc.) and possible resource types to resolve the inquiry. The resource types can include, for example, 1) an automated virtual agent, 2) automated answers, 3) external experts, and/or 4) internal experts. Routing Logic 165 or Matching Logic 155 is optionally configured to determine which types are most useful/efficiently used. This determination can rely on either binary rules: i.e., don't use experts for password questions, don't use automated responses if the questions has high emotional context; or by probabilistic rules: i.e. use an automated response if confidence > 90%, or use a community member (external expert) if they've successfully answered over 50% of questions that look like this. The resources used to resolve a customer service inquiry can include more than one resource type. For example, all four types of resources may be used serially or in parallel. As is discussed elsewhere herein, the three types of resources may use a common communication channel and/or user interface.

In some embodiments, the ability of an expert to resolve a customer service inquiry can be determined by the requester and/or the expert. A requester may indicate that he or she is unsatisfied with a response provided by an expert or automated virtual agent and ask that the customer service inquiry be forwarded to Contact Center 125. An expert may determine that he or she is unable to properly respond to a customer service inquiry. The inability to properly respond may be, for example, because the inquiry has been improperly or incompletely characterized by Parsing Logic 140, because the expert is not qualified, because confidential information (e.g., account access) is required, and/or because there is no resolution to the inquiry. In various embodiments, if an expert is unable to respond to an inquiry the requester may forward the inquiry to Contact Center 125 and/or to another requester. In some embodiments, Routing Logic 165 is configured to automatically send a customer service inquiry to an internal expert if an external expert is unable to provide an adequate answer to the inquiry.

In some embodiments, Routing Logic 165 is configured to prevent routing of customer service inquiries including confidential information to external experts. For example, inquiries including an account number, social security number, telephone number, or any of the other personal/private information discussed herein, are optionally always routed to an internal expert and/or automated virtual agent. Parsing Logic 140 is optionally configured to identify which customer service inquiries are likely to require the use of confidential information and Routing Logic 165 can then route those inquiries to the corresponding resources. For example, an inquiry that requests a change in mailing address or customer authentication may be directed to an automated virtual agent rather than experts.

In some embodiments, Routing Logic 165 is configured to give priority to first an automated virtual agent, then internal experts and then to route customer service inquiries to external experts when no internal experts are available. Matching Logic 155 may select specific internal and external experts, for routing an inquiry, using the same or different criteria.

In various embodiments, Routing Logic 165 is configured to select a human agent, e.g., an expert, based on an association between the human agent and specific nodes of the knowledge graph. For example, if a problem (e.g., a low measure of success) is identified with a responsive answer associated with a node/cluster or if there is a problem navigating from a cluster based on a customer message, then Routing Logic 165 may be used to select an expert from a plurality of alternative experts. This selection may be based on a specificity characteristic of the human expert and/or an association between the human agent and specific nodes of the knowledge graph. The human expert is selected for the purpose of improving the conversation with the client and possibly changing the knowledge graph accordingly. For example, Routing Logic 165 may be configured to select one or more human experts most likely to be able to improve the knowledge graph. Such improvement can include introduction of new nodes, new edges, and/or contents of nodes.

In some embodiments, Routing Logic 165 is configured to identify an entry node of the knowledge graph. This selection may be made from a plurality of top-level clusters/nodes of the knowledge graph. The selection may be based on characteristics, e.g., intent, of the initial customer inquiry. For example, a top-level node may be selected based on text or images within the initial customer inquiry. In one case, an inquiry including "My phone is broken" is assigned to a top-level node whose responsive message is configured to learn more about the state of the phone. Routing Logic 165 may further be configured to identify an entry node based on metadata related to the customer inquiry. As noted elsewhere herein, this metadata can include an identify of the customer, their purchase history, their service history, customer account information, customer location, a web page or app from which the customer inquiry is sent, identity of a device, and/or the like. In a specific example, a customer inquiry may come from a reservation website, the customer may have filled out a web form stating that she would like to change a reservation and entered a reservation number. This information may be used to select a top-level node at which to begin a conversation with the customer. In another device, an inquiry may come from an IoT device and be regarding a firmware update. Information related to a model number, past updates, and current user configuration of the IoT device may be used to select a top-level node.

In some embodiments, a knowledge graph includes nodes that serve as both top-level and intermediate nodes. A node that would be traversed in the middle of one conversation may be a starting point of another conversation. An example of this is a node dealing with a payment that may either be the point of an initial customer inquiry or the conclusion of a conversation about buying a product or service.

Matching Logic 155 and/or Routing Logic 165 optionally includes a machine learning system, e.g., a neural network or artificial intelligence system, configured to match and/or route customer service inquiries. As used herein, "machine learning system" is meant to include actual machine learning systems and/or other types of Bayesian/neural network/artificial intelligence systems. The machine learning system can include hardware, firmware, and/or software stored on a computer readable medium, and is optionally configured to be trained using training data to produce desired functionality. These requests may be routed to internal experts, external experts, automatic response systems, or any combination thereof. A trained machine learning system may include parts specific to a particular Enterprise 130, parts specific to particular request topics, and/or more general parts. The machine learning system may be trained to receive contents of (and/or metadata associated with) a customer service inquiry and to determine if automated response logic should receive the request. The machine learning system may output an estimated response score, a Boolean determination, a probability, the identity of a preferred automated response logic, and/or the like.

In some embodiments Storage 137 further includes storage configured to store logs of inquiry routing, e.g., information relating to current and/or past routing. The storage is thus configured via data and file structures. For example, Storage 137 can include an expert relational database in which data structures are defined to store routing data. The stored routing data includes information such as which Expert Devices 115 received customer service inquiries from which Client Devices 110, how many inquiries were routed, the source and destination of any answers to these inquiries, how many answers were routed, which experts forwarded inquiries, where the inquiries were forwarded to, and/or the like. In some embodiments, routing data storage is configured to store logs of customer service inquiries that were routed to more than one human expert (in parallel and/or serially) and/or inquiries that were routed to Contact Center 125. Similarly, Storage 137 may be configured to store logs of conversations between customers and automated virtual agents. Such logs can further include routes taken through a knowledge graph, measures of success, statements sent and received, A/B text data, knowledge graph version information, statistical data regarding success, success trend information, expert scores and rewards, and/or the like.

In some embodiments, content from automated response logic, internal experts, and/or external experts is presented to customers within a first chat window on Client Device 110A, and/or also within a second chat window on Expert Device 115A (used by an external expert, and/or also on Expert Device 115B (used by an internal expert). In these cases, optional Filtering Logic 117 may be configured to selectively filter the content presented on the different devices. For example, the most personal information, such as social security numbers, may only be seen by the customer, and personal information such as account balances and personal address may only be seen by the customer and internal expert. Filtering Logic 117 can remove personal private information from a version of the multi-party conversation seen by the external expert and/or internal expert. For example, if a customer requests access to medical information the information may be presented to the customer but not the expert. Likewise, if the customer enters an account number or a social security number, this may be used by Enterprise 130 or an automated virtual agent but not seen by any experts. Filtering can be configured to block a private or sensitive information, including but not limited to sensitive personal data, health data, personal identifiable information, financial data, family data, religious data, etc. Filtering may be applied at any point in a conversation between a customer and Customer Support System 100.

In some embodiments, Filtering Logic 117 is configured to be predictive and to anticipate when a customer is likely to send private or sensitive information. For example, it can be predicted that a customer is likely to send private information at certain nodes within the knowledge graph disclosed herein. When, or before, a conversation reaches these nodes, Response Logic 183 is optionally configured to apply Filtering Logic 117 prior to transfer of the conversation to an internal expert, to an automated virtual agent, and/or to Enterprise 130 for continuation at Contact Center 125. In this way, human experts can avoid receiving the private or sensitive information.

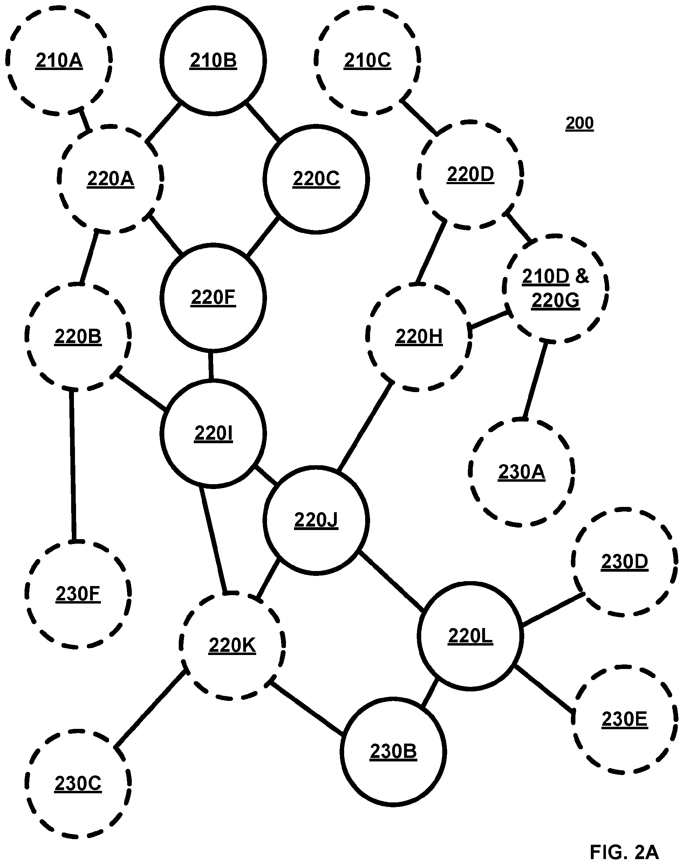

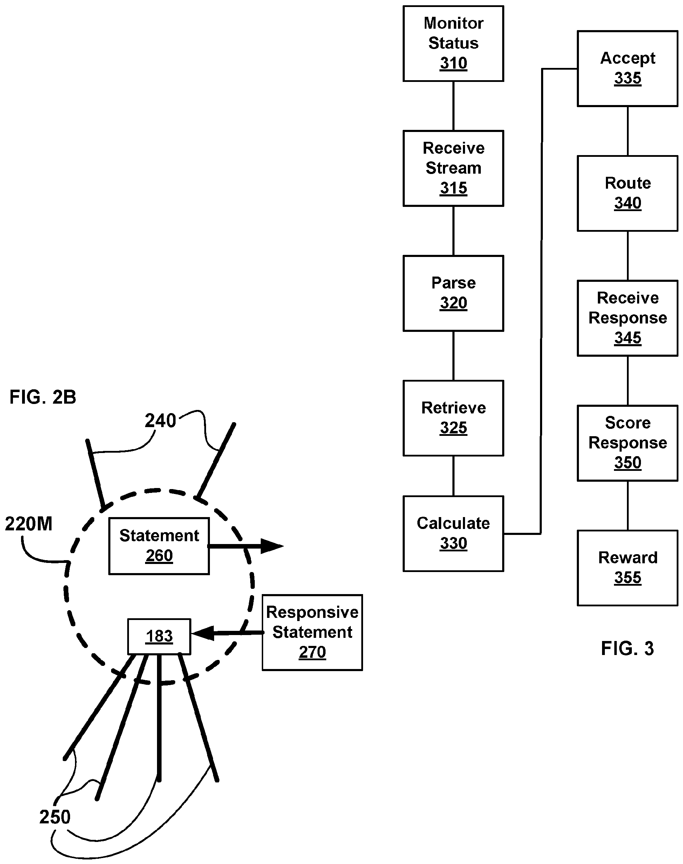

Response Management System 105, optionally further includes Graph Generation Logic 170. Graph Generation Logic 170 is configured to generate a knowledge graph (such as that illustrated in FIGs. 2A & 2B) for use in providing statements in a conversation. The knowledge graph is typically generated based on clusters of statements within historical conversations. Each of the clusters are represented by a node of the knowledge graph.

In a typical embodiment, Graph Generation Logic 170 is configured to receive a set of multi-level clusters of statements generated using Cluster Logic 127. In multi-level clusters, statements are grouped as a function of more than one criterion, one of which typically relates to positions of statements in a conversation. Optionally, the multi-level clusters include received statements grouped as a function of subject matter, e.g., intent, and also grouped as a function of conversation context, e.g., customer metadata, conversation state, and/or statement source. For example, statements regarding a refund at the beginning of a conversation may be clustered together and statements regarding a refund at the end of a conversation may be clustered together. Alternatively, statements regarding a refund and following an account balance request may be clustered together and statements regarding a refund following a request for a return may be clustered together. Clusters and navigation between the graph nodes they represent may be dependent not only on a recent response received from a customer. They may be dependent on a state of the conversation, on customer characteristic/metadata, on identities of other nodes traversed and responses received in the current conversation, intent, source of an inquiry, and/or any of the other criteria discussed herein.

Optionally, Graph Generation Logic 170 is configured to generate the knowledge graph based on a subset of a set of historical conversations. For example, the subset may include those conversations having measures of success above a threshold, a top fraction (e.g., %) of the conversations, a subset most likely to satisfy a particular intent, and/or the like.

In practice, clusters may be determined starting at the first statements within a set of historical conversations. These "top-level" clusters are parsed using Parsing Logic 140 and their contents (e.g., statements, intent, phrases, grammatical objects, metadata, customer characteristics, etc.) identified. A first layer of clusters are identified based on the identified contents. A second layer of clusters is then identified based on the parsed contents of second statements of the conversations. The statements of the second layer are clustered both on their content and characteristics of the first layer of clusters from which each of the second layer of statements followed. This process may be continued to produce a knowledge graph in which each of the clusters are represented by a node. Optionally, each intermediate node includes a statement to be sent to customer (or other party in a conversation) and one or more exit edges to additional nodes, each of the additional nodes optionally including an additional statement to be sent. Each node further includes criteria configured for selecting one of the exit edges from that node based on a received statement. Further details of this example are discussed with respect to FIG. 2A.

In some embodiments, Response Management System 105 further comprises Evaluation Logic 174 configured to send a node or group of nodes associated with an unsatisfactory measure of success to a human expert and/or to Training Logic 147 for evaluation and possible improvement. For example, one or more nodes performing below an expected level of success or performing below a statistically measured level of success (e.g., below average or below a median) may be provided to an expert via I/O 135 for evaluation. Typically, Evaluation Logic 174 is configured to evaluate nodes automatically in response to an inadequate measure of success. The expected level of success may be specific to a particular knowledge graph, knowledge graphs for a particular intent, knowledge graphs of a particular enterprise, knowledge graphs for a particular industry, and/or the like.

In various embodiments, Evaluation Logic 174 is configured to request that an expert choose between alternative statements, modify an existing statement, provide a new statement, designate criteria for selecting a particular exit edge, add a new node, move an edge, remove a node or edge, and/or the like. For example, Evaluation Logic 174 may be configured to present two or more alternative statements to an Expert and ask which of the statements is preferred in the context of a particular conversation and/or node. In various embodiments, Evaluation Logic 174 is configured to provide a current conversation to a human expert and to receive a (optionally alternative) responsive statement from the expert based on the current conversation. Thus, Evaluation Logic 174 may be configured for the expert to suggested alternative and/or improved responses in the context of specific conversations.

Evaluation Logic 174 is optionally configured to automatically provide one or more nodes to Training Logic 147 for additional training of a machine learning system associated with the nodes. This additional training may be based on new and/or historical conversations generated using the knowledge graph, and/or contributions from experts. Additional training is optionally automatically initiated based on a poor measure of success. As such, the knowledge graph can automatically adapt to changing conditions or customer needs.

In some embodiments, Response Management System 105 further comprises Updating Logic 177 configured to receive a node update and to apply the node update to the knowledge graph. The node update is optionally received from a human expert and/or Training Logic 147. For example, a node update may be received in response to a request sent by Evaluation Logic 174. In some embodiments Updating Logic 177 is configured to create a copy of the knowledge graph such that the original and copy can be comparatively tested (e.g., A/B tested.) Updating Logic 177 is optionally configured to cause Training Logic 147 to re-train one or more neural network within a knowledge graph following an update. For example, Training Logic 147 may be used to re-train a local neural network associated with a particular node that was modified. Following updating a node based on a node update received from a human expert, the node may include at least one member of a set of responsive statements associated with the node or group of nodes that was provided by a human expert and at least one member of the set of responsive statements that was received from a historical conversation. Likewise, some nodes of the knowledge graph may include responsive statements provided by human experts while some nodes of the knowledge graph may include responsive statements that were received as part of historical conversations. As a knowledge graph is evolved and updated over time, more of the responsive statements may be sourced from human experts.

In some embodiments, Response Management System 105 further comprises Reward Logic 180 configured to provide a reward an expert as consideration for providing one or more answers to a customer service inquiry, or for improving an automated virtual agent. For example, a group of experts may be rewarded for reaching consensus as to statements associated with nodes, graph edges, new nodes, node deletions, node division, criteria for selecting nodes, and/or the like. This reward is optionally a monetary reward and may be in a virtual currency. The reward is typically paid to an account of an expert. In some embodiments, the reward is specified by Enterprise 130. For example, Enterprise 130 may provide a predetermined monetary reward for each customer service inquiry resolved by experts via Response Management System 105. Enterprise 130 may specify a budget for resolving customer service inquiry and Reward Logic 180 may be configured to provide rewards to experts based on this budget. In some embodiments, one or more experts are employed by Enterprise 130 for the purpose of maintaining and updating a knowledge graph.

The amounts of rewards received by experts is optionally dependent on the rating of the response by the requester and/or other experts, dependent on the topic characteristics of the inquiry, on the amount of time and/or number of experts that contributed to the response, on the score of the expert, on the response time of the expert, on whether the customer service was forwarded (and whom it was forwarded to), on contact center capacity and utilization, on time of day, on time of year, etc. In some embodiments, Reward Logic 180 is configured to split rewards between collaborating experts. An expert may share in a reward as a result of a referral and/or collaboration. Thus, an expert may be entitled to a reward for any contribution to the knowledge graph, machine learning systems or workflow related to customer service inquiries, or similar tasks. In an illustrative embodiment, an external expert may be rewarded for modifying and/or merely approving draft statements to be associated with nodes of a knowledge graph. Reward Logic 180 is typically configured to track relative contributions of individual experts to an automated statement, and determine rewards based on track performance (use and scoring) of the automated statement. Examples of agent contributions include wording of complete and/or partial responses and tasks that contribute explicitly and/or implicitly to the training of a neural network/machine learning system/artificial intelligence system that serves automated responses, such as rating and reviewing past interactions between users and the automated responses, reviewing and approving clusters of frequently asked questions suggested by the machine learning/artificial intelligence system, etc.

In some embodiments, Reward Logic 180 is configured to provide a reward specified by the source of a customer service inquiry. For example, a requester may designate a reward amount prior to the inquiry being routed to an expert or may designate, after the inquiry is resolved, a reward (tip) to be paid to the expert that resolved the inquiry by providing a satisfactory answer. In some embodiments, experts can bid to receive customer service inquiries, the result of the bidding being based on the lowest bid and/or the experts' scores. For example, the expert willing to be paid the lowest amount (as normalized by expert score) to resolve the inquiry is considered the bidding winner. The winner of the bidding, as determined by Reward Logic 180, receives the customer service inquiry. In some embodiments, experts bid to make improvements to a knowledge graph.

In various embodiments, rewards are provided when an external expert's statement is used to train an artificial intelligence system (or other type of machine learning system), an expert contributes to identification, merging or refinement of clusters of answers, and/or when content from the external expert's answer is reused by inclusion in another answer and/or expert support content. For example, if a statement receives a particularly high score (as determined by Scoring Logic 160) then that statement may be used to train a machine learning system or be added to a knowledge graph. Such use may justify that a reward be provided to the human expert that first generated the statement. Rewards can include publicity, promotion, cash, credits, non-profit donations, and/or any other consideration. Rewards may be provided for tasks that contribute explicitly and/or implicitly to training of the knowledge graph/neural network/machine learning system/artificial intelligence system. Also, Reward Logic 180 may distribute these rewards based on experts' relative contribution to performance of automated responses.

In some embodiments Reward Logic 180 is configured to provide a reward related to customer support content. This reward may be for generation of customer support content, for example, writing blog entries or articles. The reward may be based on use of the customer support content to resolve customer support inquiries before they are passed to Response Management System 105 and/or before they require preparation of a response by an expert. A reward may also be given to an expert for rating and/or classifying customer support content. In one example, an expert may be asked to rate the suitability of an item of customer support content for resolving a specific customer support inquiry and/or a cluster of customer support inquiries. An expert may be asked to classify an item of customer support content, for example, to indicate that the content is suitable for a specific model of a product or for resolving a problem in a specific location. In one example, an expert is asked to edit or otherwise improve an item of customer support content. In one example, an expert is asked to identify customer support content that is out of date and/or no longer valid. Rewards may be given to an expert for their contribution in any of these examples. The amount and/or type of reward is optionally dependent on how often the customer support content is used, customer feedback, and/or confirmation by other experts.

Content provided by more than one human expert may be used to generate at least a partial response to a customer service inquiry. In such a case, rewards provided by Reward Logic 180 are optionally prorated among the experts based on their relative contributions, e.g., the fraction of an automated response that includes each experts' contribution. Rewards based on use of automated responses are optionally prorated based on a time elapsed since the used content was first provided by a human expert. Typically, content that was provided on a more distant date would be entitled to a lower reward. Rewards are optionally based on both a score calculated using Score Logic 160 and inclusion of content in customer support content.

Response Management System 105 optionally further comprises Response Logic 183 configured to provide automated responses (responsive statements) to received statements as part of a conversation, e.g., received from a customer. These automated responses are optionally answers to customer messages received as part of a conversation between Response Management System 105 and the customer. As discussed elsewhere herein, the response statements are can be based on navigation between nodes of a knowledge graph. In this case, each statement may be associated with a particular node of the knowledge graph, and navigation between nodes may be based on messages received from the customer.

Response Management System 105 is optionally configured to navigate to a next cluster/node based on an assignment of the most recently received customer message to the next cluster in the graph; and then to extract a responsive statement from the next cluster and send this statement to the customer. A conversation is generated as further messages are received from the customer, assigned using Cluster Logic 127, and this process is repeated.

In some embodiments, Response Logic 183 is further configured to receive assistance from a human agent, e.g., an expert, for the navigation between nodes and/or the refinement of responsive statements. For example, an expert may provide an alternative responsive answer in a particular instance and this alternative may be provided to the customer in place of the responsive answer associated with the current node/cluster. As such, Response Logic 183 may be configured to switch between providing answers from nodes of the knowledge graph to providing answers from a human agent. For example, if a message from a customer cannot be assigned to a next note/cluster at at least a minimum level of confidence that the assignment is appropriate, Response Logic 183 may be configured to pass (transfer) the conversation to a human agent. If an acceptable response is not generated by the automated system, Response Logic 183 can pass the conversation to an expert using one of Expert Devices 115. The expert can review the conversation history and provide a custom response. The expert may be presented with the responsive messages of a variety of nearby nodes and choose which one is best for the current conversation. This process may be used to establish new paths between nodes of the knowledge graph.

In some embodiments, as a conversation develops and the knowledge graph is navigated, Cluster Logic 127 and/or Response Logic 183 are configured to assign a received message to a subset of the nodes in the knowledge graph that are directly connected to a current node. In other words, the received message may be assigned to a subset of edges leading from the current node to other nodes. For example, the responsive statement of a current node may include a question to ask a customer and Cluster Logic 127 or Response Logic 183 is configured to match the customer's resulting answer to other nodes connected to the current node via an edge. In a specific example, a customer may be asked "How would you like to change your reservation." Possible responses include "Cancel please," "I would like to cancel," "change date," "different day," "upgrade," "I want to change locations," "I don't have a reservation," "I want a refund," etc. Each of these responses may be assigned to an edge connecting the current node to a subsequent node in the knowledge graph. Response Logic 183 may use Cluster Logic 127 to assign "Cancel please" and "I would like to cancel" to a first edge and to assign "change date" and "different day" to a second edge. The first edge being connected to a node including a follow-up question regarding cancellation and the second edge being connected to a node including a follow-up question regarding new dates. This assignment determines the next edge/node/cluster to be navigated to in the knowledge graph. As noted elsewhere herein, the connections between nodes may be determined using training data that includes prior conversations, e.g., conversations between customers and customer support agents or between customers and Expert Management System 105. This training data can be generated using a human expert or the automated system disclosed herein.

In some embodiments, Storage 137 further comprises storage configured to store responses to customer service inquiries, including historical conversations and responses provided by experts. The memory is thus configured via data and file structures. For example, Storage 137 can include a relational database including data records configured to store statements in a chronological order. The data records may be configured to store a conversation between a requester and one or more experts wherein each party provides content in the form or audio, text and/or video. In some embodiments, Storage 137 is further configured to store the conversations discussed herein in real-time.

In some embodiments, some or all responses stored in Storage 137 are available to a requester on a historical basis, e.g., the requester can review a history of responses provided to the requester and/or responses provided to other requesters. In some embodiments some or all responses stored in Storage 137 are available to experts, other than the experts that provided the responses. For example, responses may be made available to experts for the purpose of rating the responses, and/or to facilitate the use of the stored responses to respond to further customer service inquiries. In some embodiments, an expert may be rewarded (e.g., given a higher score) for providing a response that is used by other experts to resolve other customer service inquiries. In some embodiments, responses stored in Storage 137 are provided to Enterprise 130 such that Enterprise 130 can improve the knowledge base used by Contact Center 125.

Response Management System 105 optionally further includes Training Logic 147. Training Logic 147 is configured to train an artificial intelligence system and/or other machine learning systems, including those that are optionally included in Cluster Logic 127, Matching Logic 155, Parsing Logic 140, and/or Routing Logic 165. Training Logic 147 is configured to train these machine learning systems based on customer service inquiries, responses to these customer service inquiries, and/or scores (or measures of success) generated using Scoring Logic 160 and associated with respective member of the responses. For example, Training Logic 147 may be configured to train machine learning systems within Cluster Logic 127 for identifying clusters of customer messages and/or for assigning new customer messages to the identified clusters. Training Logic 147 may be configured to train neural networks associated with nodes of the knowledge graph, e.g., local neural networks.

In some embodiments, Training Logic 147 is configured to develop the knowledge graph discussed herein. In this case, multiple conversations between customers and human agents and/or conversations between customers and automated response systems can be used as training data. Training Logic 147 may train Cluster Logic 127 to identify clusters of customer responses at various stages of the conversation, the identification optionally being different at the beginning of a conversation relative to the end of a conversation. In addition, Training Logic 147 may be configured to train Cluster Logic 127 and/or Response Logic 183 to determine which exit edge leading from a node should be selected based on a statement received from a customer. In addition, Training Logic 147 may be used to determine initial paths between nodes/clusters of the knowledge graph. This determination may be based on statistical analysis of the training data, machine learning and/or the like. In addition, Training Logic 147 may be configured to identify which nodes of the knowledge graph are top-level nodes at which a conversation may be initiated. In some embodiments, Building the knowledge graph includes assignment of clusters of customer messages to nodes, establishing links between the nodes, associating one or more responsive message with each cluster/node, and determining top-level clusters.

In some embodiments, Training Logic 147 is configured to receive messages from or moderated by human experts. For example, a human expert may suggest or change statements to be sent to customers. These statements can include questions to ask customers and intended to help resolve a customer's issue or need, and/or these messages can include answers to customer inquiries.

In some embodiments, Training Logic 147 is configured to re-train an existing knowledge graph from a first customer support domain to a second customer support domain. For example, a knowledge graph configured for supporting an airline reservation system may be used as a starting point for developing a new knowledge graph for supporting a room reservation system. In another example, a knowledge graph configured for supporting a hotel reservation system may be re-trained by Training Logic 147 for supporting a shared housing reservation system. The first and second support domains may be associated with different business entities.

In some embodiments, Training Logic 147 is configured to update training of an existing knowledge graph based on conversations performed using that knowledge graph. For example, as new conversations are generated using a knowledge graph and measures of success (scores) are determined for the new conversations, this further information can be used to update/train the knowledge graph.

Optionally, training of a knowledge graph includes training a machine learning system at the level of an individual node. For example, a part of Response Logic 183 and/or Cluster Logic 127 may be associated with an individual node and configured for selecting knowledge graph edges leading from that particular node. In a specific example, a node that includes the statement "which lights are ON on your modem" (to be sent to a customer) and expects a responsive statement from the customer concerning the lights, may have a neural network trained to just select an edge based on the received responsive statement and/or other selection information discussed herein. This node specific neural network may be refined as further conversations are generated using the node and measures of success are determined.

In some embodiments individual nodes or small sets of nodes may each have a dedicated neural network. These "local" neural networks are trained to specifically process statements likely to be received by a customer at that node and to select an edge/response based on the received statement. For example, at a particular node a statement, "please provide the model number of your phone," may be sent to a customer and a response received from the customer. A local neural network may be configured to process the range of possible customer responses received in response to that particular sent statement. This is a relatively easy problem, as compared to training a neural network on a very large range of possible conversations represented by many sent statements or nodes. There is a relatively limited set of expected responses, including a category of "doesn't match anything expected." The neural network is trained to select an exit edge of the node (leading to a further statement to the customer) based on the response received from the customer, and optionally other information discussed herein such as a state/history of the conversation. If knowledge graph is modified, as discussed elsewhere herein, by the addition of an entirely new node, elimination of a node, addition of an exit edge to a node, and/or moving connections between nodes, then only the local neural networks associated with the nodes impacted by the modification need to be re-trained.

Having neural networks associated with particular nodes simplifies the training needed when input from an expert is used to modify the knowledge graph. When a change is made, only the local neural network (local to the change) needs to be re-trained. This allows for continuous modification of the knowledge graph by experts while avoiding extensive and undesirable re-training of large neural networks. As used herein, the term "local neural network" is used to refer to a neural network configured to process a part of a conversation that occur at a particular node of the knowledge graph, or alternatively at a particular set of nodes that represent less than 1, 5 or 10% of the knowledge graph. The use of local neural networks provides for the use of machine leaning within the knowledge graph while still giving transparency as to the conversation flow and providing for detailed contributions by experts.

Expert Management System 105 optionally further includes Healing Logic 187. Healing Logic 187 is configured to manage correction and/or adaption of the knowledge graph by identifying and updating nodes of the knowledge graph that produce undesirable results. This correction includes identifying these nodes and optionally engaging a human expert to modify the identified nodes. In some embodiments, Healing Logic 187 uses Scoring Logic 160 to determine measures of success and uses Routing Logic 165 to identify experts qualified to suggest improvements to particular nodes. Healing Logic 187 may further be configured to identify nodes in need of improvement based on analysis of conversations that take different paths through the knowledge graph but have nodes in common. For example, a particular node may cause a reduced measure of success for a variety of different conversations and Healing Logic 187 may be configured to identify this node using statistical or correlation models. Similar approaches may be applied to groups of nodes within a knowledge graph. In some embodiments, Healing Logic 187 is configured to identify groups of nodes that reduce measures of success for multiple different conversations.

In some embodiments, Healing Logic 187 is configured to test nodes of a knowledge graph by engaging in conversations with experts or test customers. Such testing is optionally performed prior to using a new or updated knowledge graph with actual customers. Testing may include navigation of the knowledge graph in a conversation with one or more experts followed by requests for feedback from the experts. For example, following a conversation Healing Logic 187 may be configured to ask the experts which of a plurality of alternative responsive statements would have been best at a particular node.

There are a variety of (non-exclusive) ways in which nodes may be identified as producing undesirable results. For example, poorly performing nodes can be detected by failures to assign a customer message to a next node within a desired level of confidence; poorly performing nodes can be detected by negative feedback from customers; poorly performing nodes can be detected by delays in messages in a conversation; poorly performing nodes can be detected by failure to resolve customer issues; poorly performing nodes can be detected by failures at subsequent nodes in a conversation; poorly performing nodes can be detected by review of conversations by experts, and/or the like. Any of these factors may be considered in determining a measure of success or score for a conversation or set of nodes. For example, in some embodiments, a quality control review of conversations focuses on those that generated suboptimal feedback from customers and human experts identify those nodes/clusters traversed in these conversations that present opportunities for improvement.

Healing Logic 187 may be configured for a human expert to change connections between nodes, to change the criteria by which subsequent clusters are selected, to change responsive messages to be sent to customers, to create new nodes and associated clusters, to split or eliminate clusters, etc. For example, if a new product is produced by a company, previously unknown customer service inquiries may result. These new inquiries will be identified by Healing Logic 187 as the existing knowledge graph may fail to resolve them. An expert can then add new nodes and paths connecting those nodes so as to adapt the knowledge graph to the new circumstances. In a practical example, the new inquiries will begin a conversation that traverses the knowledge graph to a point where there is an inadequacy in the automated response. At that point, Response Logic 183 hands the conversation to a human agent who continues the conversation by manually providing response messages to the customer. After this has occurred a number of times, Healing Logic 187 may suggest that the manually provided response messages be associated with new clusters/nodes of the knowledge graph. This addition of clusters/nodes can be automatic, or can be initiated and/or reviewed by a human agent.

Healing Logic 187 my used Routing Logic 165 or Matching Logic 155 to select a human expert to engage for the purposes of correcting or adapting the knowledge graph. This selection can be based on any of the criteria discussed elsewhere herein. For example, a human expert may be selected based on the domain expertise of the expert. With regards to the knowledge graph, an expert may also be selected based on how specific particular nodes are (their "specificity levels"). For example, at the start of a conversation, corresponding to upper-level nodes, a broad knowledge may be preferred. As the conversation progresses, corresponding to lower-level nodes, a more specific knowledge may be preferred. In some embodiments, specific experts or groups of experts may be pre-associated with specific nodes of the knowledge graph.

Response Management System 105 further includes at least one Processor 192. Processor 192 is an electronic and/or digital processor including circuits configured to execute at least Matching Logic 155, Cluster Logic 127, Response Logic 183, Graph Generation Logic 170, Scoring Logic 160, and/or Healing Logic 187.

Any of the machine learning systems within Response Management System 105 may be trained based on scores determined using Scoring Logic 160 and Healing Logic 187 as described elsewhere herein. Such training is optionally ongoing. For example, a trained machine learning system may be further refined as additional customer service inquiries are received and resulting responses are scored. Further, the training can be based on any of the characteristics of a customer service inquiry. For example, Training Logic 147 may use metadata associated with an inquiry, an identity of a source of the inquiry, an identity of an Enterprise 130 to whom the inquiry is directed, a communication channel (e.g., internet, chat, phone, etc.) over which the inquiry is received, an inquiry history, characteristics of specific human experts, inquiry contents (e.g., text or images), time of day/date, and/or the like. Training Logic 147 includes hardware, firmware, and/or software statically stored on a computer readable medium.

Customer Service Knowledge Base 106 may be included in the same computing device as part of Response Management System 105 or in a separate computing device. Customer Service Knowledge base 106 includes a Storage 107 configured to store customer service content. Storage 107 can include any type of non-transient computer readable storage medium, such as such as those discussed elsewhere herein. Storage 107 is configured to store customer support content using data structures and/or formatting suitable for such content. The stored customer support content can include articles, webpages, blogs, and/or any of the other types of documents discussed herein. The stored customer support content is optionally accessible via network addresses such as internet protocol (IP) addresses, universal resource locators (URLs), and or the like. For example, the content may be organized into browsable and/or searchable web pages. In some embodiments, customer support content includes links to third party content, such as a Wikipedia page or a government website.

Customer support content is typically associated with metadata characterizing the content. For example, an article may be stored in association with cluster identifiers, tags, titles, ratings, etc. The metadata is optionally provided by experts associated with Response Management System 105. Customer support content is optionally associated with one or more clusters of customer support inquiries.

Customer Service Knowledge Base 106 further includes Content Selection Logic 108. Content Selection Logic 108 is configured to select customer service content from Storage 107. This selection may be based on the metadata associated with the customer service content, activity of a customer, text provided by a customer, a customer's profile, and/or the like. For example, Content Selection Logic 108 may be configured to select customer service content based on a browsing history, purchase history, inquiry history, and/or other past activity of a customer. Content Selection Logic 108 may be configured to select customer service content based on all or part of a customer service inquiry. For example, content may be selected based on one, two or more words included in a customer service inquiry. This selection can occur as a customer is providing the customer service inquiry and be updated as the customer provides additional words. Content Selection Logic 108 is optionally configured to select customer service content based on feedback, scores, and/or other types of ratings received from customers and/or experts.

Customer Service Knowledge Base 106 optionally further includes Qualification Logic 109. Qualification Logic 109 is configured to enable experts to contribute to customer service content. For example, an expert may assign an item of content to a cluster, provide tags and/or topic identifiers to content, may curate content, may edit content, may score content (e.g., using Scoring Logic 160), may rate and/or approve content, and/or the like. Experts may also provide customer service content, or links thereto, as part of a response to a customer service inquiry. As discussed elsewhere herein, experts are optionally provided with a reward using Reward Logic 180 for such activity.

Content Selection Logic 108 is optionally included in embodiments of Matching Logic 155.

In various embodiments, Client Devices 110 include Control Logic 111 and Display Logic 112. Control Logic 111 is configured to provide customer support content to a customer, typically prior to sending a related customer service inquiry to a human expert, e.g., to Response Management System 105 to be routed to an expert using Routing Logic 165. For example, Control Logic 111 may be configured to provide a set of customer support content as a set of links on which a customer can click to view each item of content in detail.

Optional Display Logic 112 is configured to display one or more links to the customer support content and a text input field, to the customer. The links are selected from Storage 107 and selected using Content Selection Logic 108, and provided by Control Logic 111. The text input field is configured to receive a customer service inquiry from the customer. The inquiry may be sent to Customer Service Knowledge Base 106 and/or Response Management System 105. Display Logic 112 is optionally further configured to display an identity of a human expert (e.g., a name or picture) and/or a conversation between the expert and the customer.

In various embodiments, Control Logic 111 is configured to process text provided by a customer one piece at a time, e.g., one character, one word or one phrase at a time. For example, the inquiry "How do I reset my modem password," can be processed by Control Logic 111 as it is being type into the text input field. As each piece of the customer support inquiry is typed that piece may be sent to Customer Service Knowledge Base 106 and the list of content is updated. As such, this processing can include selection and display of links to customer support content on a subset of the customer inquiry. Specifically, the words "How do I reset" for a customer who has been navigating web pages related to modems and/or who has just purchased a modem may be sufficient to select and display links to customer support content. As the customer continues to type "my modem" and "password," these phrases are sent to Customer Service Knowledge Base 106 and the displayed list of links may be updated.

When the customer is finished entering their customer support query, the customer sees a list of customer support content that may resolve their inquiry. In addition, Control Logic 111 is configured to provide the customer with an option of sending the inquiry to an expert managed by Response Management System 105, to be routed to an expert as discussed elsewhere herein. It is desirable but not necessary that the inquiry be sent to the expert after the customer has had a chance to review the presented list of customer service content. In some embodiments, a customer has a choice of sending the inquiry to an expert or selecting one of the displayed links to customer service content. In some embodiments, Control Logic 111 is configured such that a customer is required to review customer service content (or a list thereof) before the customer can send their customer service inquiry to an expert.

Control Logic 111 is optionally further configured to track activity of a customer. For example, Control Logic 111 may be used to track browsing activity of the customer in a website managed by Enterprise 130. In some embodiments, the expert that receives the customer service inquiry also receives the list of customer service content selected using Content Selection Logic 108.

In alternative embodiments, Client Devices 110 include devices which may not be directly controlled by a person in real-time. For example, Client Devices 110 can include an IoT device, a security system, a vehicle, machinery, an entertainment system, and/or any of the other devices discussed herein. In some embodiments, one of Client Devices 110 includes a system similar to Response Management System 105 (e.g., being configured to participate in a knowledge graph guided conversation), and the two Response Management Systems 105 may communicate with each other in a "conversation." Such embodiments may be used to enable communication between artificial intelligence systems and/or other devices without establishing a ridged communication protocol. Use of the knowledge graph disclosed herein can enable adaptive and flexible machine to machine communication.

FIG. 2A illustrates a path of a conversation through a Knowledge Graph 200, according to various embodiments of the invention. This path and Knowledge Graph 200 are highly simplified for the purposes of example. The conversation may be initiated, for example, by a customer at a troubleshooting webpage associated with Enterprise 130. On this webpage the customer provides their phone number, login credentials, and an indication of which phone is having a problem. This metadata and the identity of the webpage are used to select Top-Level Node 210B (Top-Level nodes being individually designated 210A, 210B, 210C, etc.), from among a plurality of top-level nodes, for entry into Knowledge Graph 200. This node can be associated with a response statement: "What seems to be wrong with your phone," which is communicated to the customer using Response Logic 183.

In response, the customer messages "It is broken." This message is parsed using Parsing Logic 140 and then used by Cluster Logic 127 to select an edge from Top-Level Node 210B to one of the Intermediate Nodes 220 (individually designated 220A, 220B, 220C, etc.). In the illustrated example, Intermediate Node 220C is associated with a cluster that is the best match to "It is broken." Cluster Logic 127 is then used to navigate via an edge to Intermediate Node 220C. Intermediate Node 220C is associated with the responsive statement "Is there physical damage or a software problem?" which is then sent to the customer. The customer then messages, "I dropped it, the screen is cracked." Again, this message is parsed using Parsing Logic 140 and Cluster Logic 127 is used to identify that the response is most closely related to a cluster related to "physical damage." The next edge/Intermediate Node 220 that has a path to Intermediate Node 220C and whose cluster best matches the message received from the customer. This cluster is associated with an edge leading to Intermediate Node 220F. Therefore, in the example shown, Intermediate Node 220F is selected and this node is associated with the responsive message "Depending on the amount of damage the screen may be repairable; would you like to schedule a repair session with a technician?", which is sent to the customer.

In summary the conversation proceeds as follows:

| | |
|---|---|
| *(Node 210B) Service:* | What seems to be wrong with your phone? |
| *Customer:* | It is broken |
| *(Node 220C) Service:* | Is there physical damage or a software problem? |
| Customer: | I dropped it, the screen is cracked |
| *(Node 220F) Service:* | Depending on the amount of damage the screen may be repairable; would you like to schedule a repair session with a technician? |
| *Customer:* | No |
| *(Node 220I) Service:* | I see that your phone is covered by insurance, would you like it replaced? |
| Customer: | Yes |
| *(Node 220J) Service*: | There will be a $99 deductible, how would you like to pay, credit card or PayPal? |
| *Customer:* | Can I just charge it to my credit card? |
| *(Node 220L) Service:* | Sure, please confirm the last for digits of your Plumb Pay account. |
| *Customer:* | 9876 |
| *(Node 230B) Service:* | Thank you, a return authorization form is being sent to your registered e-mail. Please return your phone to that address. A replacement phone will be sent to your billing address. Is there anything else I can help you with? |
| *Customer:* | Can I get an upgrade? |

At each step, a path is navigated through Knowledge Graph 200 until the Leaf-Node 230B is reached and the message "Thank you, a return authorization form is..." is sent to the customer. The customer then responds with the question "Can I get an upgrade?" In some embodiments, this results in selection of a new Top-Level Node 210 and a conversation about upgrades occurs using the same process. The new Top-Level Node 210 is optionally selected based in part on the preceding conversation.

At each node there a variety of messages that may be received from customers. For example, at Top-Level Node 210B the customer may respond "It is broken," "It won't charge" or "I cannot unlock it." Of course, at each node there can be many more responses, and clusters of responses than are illustrated in FIG. 2B.

As noted elsewhere herein, Knowledge Graph 200 is optionally generated using Graph Generation Logic 170 and historical conversations. Top-Level Nodes 210 may be generated based on clustering of initial statements in a conversation (or part thereof). Intermediate-Level Nodes 220 may then be generated based on clusters of subsequent statements in the conversations. Note that a node, such as Intermediate-Level Node 2201, may be reached in a conversation from a plurality of nodes and/or may have a plurality of edges connecting to subsequent nodes in the conversation. An edge is optionally bidirectional, meaning that the lines connecting nodes in FIG. 2A may represent an edge that is both an entry edge and an exit edge. The generation of Intermediate-Level Node 2201 may include identification of statement clusters associated with Intermediate-Level Nodes 220B and 220F, each of which is followed by statements that be included in a cluster associated with Intermediate-Level Node 2201. From Node 2201, the conversation may lead to clusters of statements associated with Intermediate-Level Nodes 220J or 220K.

FIG. 2B illustrates details of an Intermediate Node 220M, according to various embodiments of the invention. Node 220M may be a part of Knowledge Graph 200 and is connected by one or more Entry Edges 240 and one or more Exit Edges 250. Node 220 is reached from a prior node via one of Entry Edges 240, and may reach further nodes via Exit Edges 250. Node 220M is associated with a Statement 260 to be sent as part of a conversation. As noted elsewhere herein, a statement such as Statement 260 may include a wide variety of data including human readable text, audio, images, links, commands, metadata, device settings, authentication/encryption data, and/or the like.

Responsive to sending Statement 260 to a customer, Node 220M is configured to receive a Responsive Statement 270 from the customer via Network 120 and I/O 135. As with Statement 260, Responsive Statement 270 may include any of the types of information and/or data types discussed herein. Following receipt, Responsive Statement 270 is processed using Cluster Logic 127 and/or Response Logic 183 to determine if Responsive Statement 270 is sufficient to select one of Exit Edges 250. If so, then a preferred member of Exit Edges 250 is selected and the conversation proceeds via the selected edge to the next node of Knowledge Graph 200.

Optionally, one or more of Exit Edges 250 lead to engagement with an expert (via Expert Device 115) and/or activation of Content Selection Logic 108 to provide customer service content to a user. Thus, a conversation may leave the knowledge graph and access other resources, optionally later returning to the knowledge graph. Such access to other resources may be considered part of the history/state of the conversation. An Entry Edge 240 may come from a resource external to Knowledge Graph 200. Likewise, an Exit Edge 250 may lead to a resource external to Knowledge Graph 200.

Operation of Node 220M is illustrated in the following example:
Statement 260 includes a text message "Which model phone do you have?", which is sent to the customer;
In response, a Responsive Statement 270 "ifon ten" is received;
Cluster Logic 127 is used to determine that the text "ifon ten" is most closely related to a cluster entitled "iPhone X" (relative to clusters entitled "iPhone 6," "iPhone 7," "iPhone 9," "iPad," "Android Phone," and "Unknown");
Based on this determined relation, Response Logic 183 is used to select the member of Exit Edges 250 associated with the "iPhone X" cluster; and
Navigation to the next node of the knowledge graph then proceeds via the selected member of Exit Edges 250. At this next node, the process is repeated, and another Statement 260 may be provided to the customer.

As noted elsewhere herein, the process of selecting one of Exit Edges 250 based on Responsive Statement 270 may be hard coded (e.g., based on strict rules), may be supervised by an Expert, may be based on selections or suggestions made by an Expert, may be made by a machine learning system trained using historical conversation data, and/or the like. The selection of one of Exit Edges 250 may or may not include assignment of a received statement to a cluster associated with the selected Exit Edge 250. The selection of one of Exit Edges 250 may be based on information other than merely Responsive Statement 270. For example, the selection of an edge may be based on prior responsive statements, a history of the conversation, characteristics of the customer, received metadata, and/or any such information discussed elsewhere herein.

In some embodiments, parts of Cluster Logic 127 and/or Response Logic 183 associated with Node 220M are specifically configured to process responses to the Statement 260. For example, a neural network may be specifically trained (e.g., using Training Logic 147 or Graph Generation Logic 170) to handle responses to the statement "Which model phone do you have?" This granularization of the use of machine learning within Response Management System 105 allows for the use of artificial intelligence while also allowing input from experts. In some embodiments, machine learning is used to interpret and process received Responsive Statements 270 at individual nodes, while experts are used to designate possible statements sent from each node and/or possible edges between nodes. Machine learning and/or experts may be used to remove nodes or identify new nodes. Machine learning and/or experts may be used to remove clusters or identify new clusters.

In development of Knowledge Graph 200, Entry Edges 240 are established by identification (in historical conversations) of clusters of statements and responsive statements that precede a cluster of statements represented by Statement 260. Then identifying clusters of statements that may follow Responsive Statement 270. Each of these following clusters may be associated with a following node of Knowledge Graph 200 and may be navigated to via a different Exit Edge 250. Criteria for selecting one of Exit Edges 250 is optionally initially determined by training a part of Response Logic 183 (e.g., a neural network) to perform the specific task of making the exit edge selections needed at Intermediate-Level Node 220M. The relevant statements of the historical conversations may be used for this training. Optionally, after initial development using Cluster Logic 127 and Graph Generation Logic 170, experts are employed to further refine Intermediate-Level Node 220M. As is described further herein, this refinement can include identification of an improved Statement 260, improving selection of Exit Edges based on Responsive Statement 270, and/or changing of Entry Edges 240 and Exit Edges 250. Further, after initial development using Cluster Logic 127 and Graph Generation Logic 170, further refinement may be achieved by training of Response Logic 183 based on new conversations generated using Knowledge Graph 200 and/or Intermediate-Level Node 2201. Use of either one or a combination of both these further refinement approaches can be used to adapt Knowledge Graph 200 to changing conditions and needs.

The internal structure of Node 220M, as illustrated in FIG. 2B, may vary in alternative embodiments, while achieving the same net functionality. For example, in some embodiments, some Intermediate-Level Nodes 220 are each associated with a cluster of statements received from a customer and each associated with a plurality of responsive statements to be sent to the customer.

FIG. 3 illustrates a method of processing a customer service inquiry, according to various embodiments of the invention. These methods are optionally performed using Response Management System 105. When a stream of customer service inquiries is received from Client Devices 110 the methods of FIG. 3 may be used to determine which of the inquiries should be accepted and processed by Response Management System 105 and which are better resolved at Contact Center 125 (optionally under control of Enterprise 130).

In a Monitor Status Step 310 the status of a plurality of human experts is monitored. This step is optionally performed using Status Logic 145. The status can include whether a particular human expert is connected to Response Management System 105 via one of Expert Devices 115, whether the expert is currently engaged in responding to customer service inquiries, the specialty characteristics of available internal and external experts, and/or the like.

In a Receive Stream Step 315 a stream of customer service inquiries is received. These are typically received from Client Devices 110 via Network 120. In some embodiments, some of the customer service inquiries are received from Enterprise 130 and/or Contact Center 125.

In an optional Parse Step 320 each member of the customer service inquiries is parsed. Typically, the parsing is performed using Parsing Logic 140. The parsing is configured to determine one or more topic characteristics for each of the customer service inquiries. The parsing may also be used to identify metadata associated with the customer service inquiries.

In an optional Retrieve Step 325 data regarding each of the plurality of experts is retrieved from data storage. The retrieved data can include specialty characteristics, expected rewards, location, communication bandwidth, expert scores, and/or the like, regarding each of the plurality of experts.

In a Calculate Step 330 a probability that each (or any) of the plurality of experts can resolve each of the customer services inquiries is calculated. The calculation is optionally based on the topic characteristics of each inquiry, the specialty characteristics of each of the plurality of experts, and/or other data related to the human experts. In some embodiments, Calculate Step 330 includes a calculation of a probability that an automated response system will be able to answer each of the customer service inquiries, respectively.

In an Accept Step 335, a subset (or all) of the plurality of inquiries is accepted. In some embodiments, the subset is selected by comparing 1) a threshold and 2) the calculated probability of each inquiry being resolved by a human expert (e.g., by members of the plurality of experts). In other embodiments, the subset is selected by comparing 1) a threshold and 2) the calculated probability of each inquiry being resolved by automated response logic. A machine learning system may be applied to each customer service inquiry and data characterizing members of the plurality of experts retrieved in Retrieve Step 325.

In a Route Step 340 each member of the subset accepted in Accept Step 335 is routed to at least one of the plurality of experts and/or automatic response logic. Route Step 340 is optionally performed using Routing Logic 165, as discussed elsewhere herein. Routing Logic 165 may use a trained machine learning system for this purpose.

In an optional Receive Response Step 345, a response to one or more members of the subset of the plurality of inquiries is received. The response may be a complete response or a partial response. For example, the response may be a complete response that is ready to be provided to a requester; or the response may be a partial response including content received from one or more of the plurality of experts and/or received from automated response logic. Complete responses may be automatically communicated to a requester. As is discussed elsewhere herein, a response may include contributions from both human expert and automated systems. A human expert may modify a partial response provide by an automated system. Completed responses are optionally sent directly to request sources, e.g., sent to Enterprise 130, Contact Center 125, and/or members of Client Devices 110. Partial responses are not typically sent directly to Client Devices 110, although they may be sent to Enterprise 130 and/or Contact Centers 125 for modification and/or approval.

In an optional Score Response Step 350, the response received in Response Step 345 is scored using Scoring Logic 160. The scoring can be based on any of the criteria discussed herein with regard to Scoring Logic 160. Both human and/or automated contributions to a response may be scored. The scores are typically intended to be a measure of a quality of the response. Responses that score well are optionally used to improve Knowledge Graph 200 as discussed elsewhere herein.

In an optional Reward Step 355, a reward is provided to one or more of the plurality of experts. The reward is compensation for contributing to a response to one of the subsets of customer service inquiries. The reward is optionally a financial reward. The reward may be for contributing all or part of a response. More than one of the plurality of experts may receive a reward for contributing to the same response. In some embodiments, the reward is made for a contribution to response content that is later included in customer support content. For example, a first human expert may contribute to a response to a first customer service inquiry. The first human user can receive a reward for this contribution, e.g., based on a good score etc. That contribution can then be incorporated in customer support content. When the stored response is later used (again) as customer support content, the first human expert can then receive an additional reward for the later use of the contribution. The first human expert can receive repeated rewards (2 or more) for a contribution that is used repeatedly (2 or more times) to respond to customer service inquiries from different sources, e.g., different members of Client Devices 110.

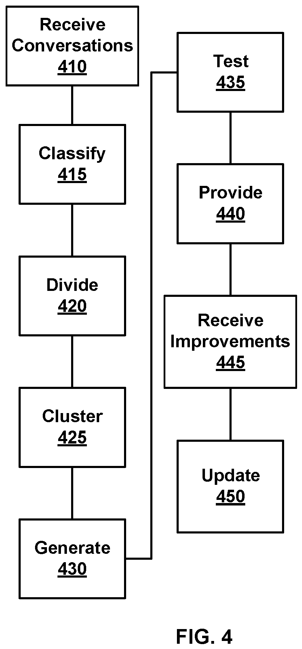

FIG. 4 illustrates methods of generating and maintaining a knowledge graph according to various embodiments of the invention. In these methods, the knowledge graph is generated based on historical conversations and/or maintained using measures of success for new conversations performed using the knowledge graph. Human experts are optionally used to facilitate improvements to the knowledge graph. Steps relating to generating the knowledge graph are optional in embodiments in which the knowledge graph is received from a third party and maintained using methods of FIG. 4. The methods illustrated by FIG. 4 are optionally performed using the Response Management System 105 of FIG. 1 and/or the Knowledge Graph 200 of FIGs. 2A & 2B.

In a Receive Conversations Step 410, a plurality of historical conversations are received. These conversations typically include statements exchanged between a customer and one or more human or virtual support agent. If statements are received in image or audio form, they may be converted to text prior to processing. In an illustrative embodiment, transcripts of customer support conversations are received from an enterprise. Such transcripts may be derived from a call center, from interaction with human experts, and/or from automated customer support agents.

In an optional Classify Step 415, the received conversations are classified with regard to their success, e.g., with regard to how well they served the needs of the customer and/or an enterprise. Typically, the success of each conversation is quantified by a measure of their success. As discussed elsewhere herein the measure of success of a conversation is optionally determined using Scoring Logic 160. In some embodiments, the measure of success is used to discard less successful conversations such that only the more successful are used in the development and/or training of Knowledge Graph 200. Specifically, only the more successful conversations may be used is positive examples for training purposes in the remaining steps illustrated in FIG. 4. Those conversations with lower measures of success are optionally used as negative examples for training purposes.

In an optional Divide Step 420, the conversations and/or subsets (e.g., snippets) thereof are divided as a function of "intent." As noted elsewhere herein, intent may be determined using Parsing Logic 140 and typically represents a purpose or goal of the conversation. Examples of intent include making a reservation, resetting a password, getting an account balance, making a payment, obtaining a device status, establishing a wireless connection, registering a device, troubleshooting a device, and/or the like.

A particular conversation can include more than one intent. For example, a customer may engage a virtual agent for the purpose of resetting a password and arranging for a product return in a single conversation. In some embodiments, Parsing Logic 140 is configured to segment conversations into statement groups of different intent. As a result, a first part of a conversation may be assigned a different intent than a second part of the same conversation. These two parts can then be assigned to different groups of conversation in Divide Step 420. Once conversations are divided into different groups, each group may be used to develop an instance of or separate part of Knowledge Graph 200. Thus, conversations about selecting a smartphone and conversations about bill payment may be used separately to develop and/or maintain Knowledge Graph(s) 200.

In a Cluster Step 425, clusters of statements within each conversation are identified. Clusters are optionally formed within the classifications and/or divisions established in Steps 415 and/or 420. As discussed elsewhere herein, clusters can represent a single statement or group of statements having similar meaning and/or requiring a similar response. For example, "I need to reset my password" and "I forgot my password" may be assigned to a common cluster. In some embodiments, Cluster Step 425 includes generating of multi-level clusters, starting at the beginning of a conversation or at the start of a part of a conversation having a distinct intent. In multi-level clusters, each intermediate level of clusters includes statements of a conversation that follow statements clustered at a prior cluster level. For example, a cluster of statements indicating a need to reset a password on a first level may be followed on a next level by a cluster of statements regarding lack of knowledge of a user name, a cluster of statements regarding knowledge of a user name, and a cluster of statements regarding knowledge of an alternative identifier. As discussed elsewhere herein, in practice selection of one of these next level clusters may be dependent on a response received from a customer and/or other information.

In a Generate Step 430, a knowledge graph, e.g., Knowledge Graph 200, is identified based on the conversations received in Receive Conversations Step 410 and/or the clusters identified in Cluster Step 425. Optionally, each node of the generated knowledge graph represents a first statement and each edge of the knowledge graph represents a path to a subsequent statement. The intermediate nodes are configured such that the subsequent statement and edge may be selected based on a statement received from a customer in response to the first statement, and/or any of the other criteria discussed herein.

Generate Step 430, optionally further includes generation of selection criteria associated with each node, which can be used to select between Exit Edges 250 from the respective node. In some embodiments, this selection criteria includes associating each Exit Edge 250 with a different cluster of statements that can be received from a customer. In some embodiments, the selection criteria include a machine learning system (e.g., a trained neural network) configured specifically to select one of a fixed number of Exit Edges 250 leading from a particular Intermediate Node 200. The selection can be made based on a statement received from a customer, a state of the current conversation, a history of nodes traversed in the knowledge graph, and/or any of the other criteria discussed herein.

In a Test Step 435, the knowledge graph generated in Generate Step 430 is tested to identify one or more nodes of the knowledge graph that produce sub-standard results. A result of Test Step 435 includes one or more measure of success for individual nodes and/or groups of nodes. As noted elsewhere herein, Scoring Logic 160 and be configured to determine measures of success based on a wide range of criteria. The knowledge graph may be tested in actual use in conversation with customers, may be tested in simulated use in conversations with simulated customers, may be tested using a tranche of historical conversations reserved for testing purposes, may be tested in comparison to an alternative version of the knowledge graph, may be tested by experts, and/or the like.

Tests results may be considered "sub-standard" if they fall below a minimum measure of success, if they are in a lower percentile (e.g., 10 or 25%) of success, if they fall below an expected measure of success for a particular enterprise, application or intent, if they fall below a predetermined target, and/or the like. In some embodiments, following the generation of a new knowledge graph, a fraction of the poorest performing nodes are considered sub-standard. For example, the bottom 10, 25 or 33% of nodes may be considered worth improving.

In a Provide Step 440, conversation results from those nodes identified as having sub-standard tests results are provided to one or more experts for evaluation. These conversation results may include just a few exemplary statements around a sub-standard node or full exemplary conversations. In some embodiments, an expert can browse exemplary conversations to manually identify possible improvements in the conversations and/or factors that may result in poor measures of success. For example, an expert may notice that a certain type of customer statement is consistently misunderstood and may suggest alternative responsive statements to that type of customer statement. These alternatives may be associated with new nodes and/or new Exit Edges 250 to previously existing nodes. The expert may be presented with an interface configured to provide feedback and suggested changes to the knowledge graph. As noted elsewhere herein, the changes can include changes to statements to be provided to customers, and/or can include changes to the structure of the knowledge graph (e.g., addition, deletion and/or movement of nodes or edges).

In a Receive Improvements Step 445, suggestions for improvement to the identified nodes are received from the one or more experts of Provide Step 440. Optionally, consensus among experts is required for acceptance of a suggested improvement.

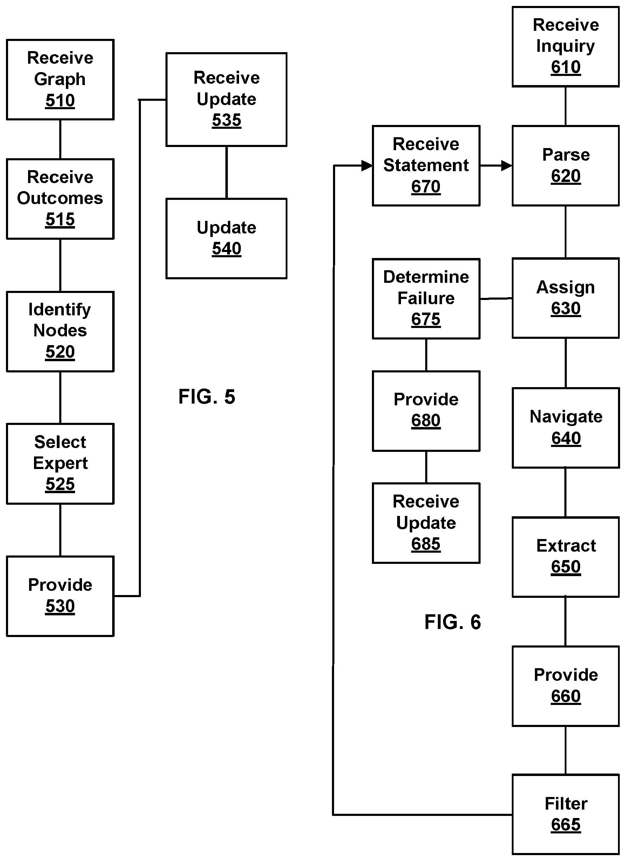

In an Update Step 450, the knowledge graph, e.g., Knowledge Graph 200, is updated based on the suggestions received in Receive Improvements Step 445. Test Step 435 through Update Step 450 are optional and/or may be repeated several times until a desired success probability is reached. These steps may be used to test or validate an existing knowledge graph. As discussed with respect to FIG. 5, testing of Knowledge Graph 200 is optionally a continuous, on-going process.

FIG. 5 illustrates methods of maintaining an automated customer response system, according to various embodiments of the invention. These methods include monitoring use of a knowledge graph to support conversations between customers and virtual agents, detecting less than optimal outcomes which may indicate opportunities for improvement in the knowledge graph, and using a human expert to facilitate an improvement. The resulting improved knowledge graph can be navigated to provide improved automated responses to customer messages in a conversation. As noted elsewhere herein, the process of monitoring use of a knowledge graph and making improvements allows the knowledge graph (and automated customer response system) to adapt in real-time to changing conditions.

In a Receive Graph Step 510, a knowledge graph, such as Knowledge Graph 200 is received by Customer Support System 100. This knowledge graph may be, for example, generated using the methods of FIG. 4 or may be received from a third party. The knowledge graph represents conversations, such as those between virtual agents and customers. Each node of the knowledge graph being associated with at least one statement to be sent from Response Management System 105 to a customer. Edges of the knowledge graph representing connections between statements of a conversations.

Optionally, Receive Graph Step 510 occurs on a continuous basis (as opposed to a batch mode) in which conversations are received as they occur or shortly thereafter. Optionally, conversations are automatically received after they are concluded. For instance, conversations may automatically be received one at a time, on an hourly basis (e.g., an hour's worth of conversations are received together), on a daily basis, on a weekly basis, and/or on some other schedule. Conversations may be received as they are produced.

In a Receive Outcomes Step 515, a plurality of customer support conversations and their outcomes are received. Each of the conversations including an ordered exchange of messages between at least one customer and a source of responses. The conversations may include conversations between a customer and a human agent and/or between a customer and an automated response system. Typically, the received conversations are applicable to a particular customer support domain. For example, they may be applicable to a particular enterprise, intent and/or task. The conversations may be received as they are produces, e.g., as they are generated using Response Management System 105.

Each of the received outcomes includes a measure of success of a member of the received conversations at one or more nodes of the knowledge graph. As noted elsewhere herein, the measures of success may be determined using Scoring Logic 160 and may be based on a wide variety of criteria. Measures of success are optionally determined as conversations progress and/or shortly after they are concluded. In some embodiments, measures of success are calculated in real-time such that problem conversations can be diverted to experts as they occur. In addition to a measure of success, a conversation may include data representing a result, such as an intent, a sale of a product or failure to complete a sale.

In an Identify Nodes Step 520, nodes, and/or sets thereof, having poor measure of success are identified in the knowledge graph. For example, nodes may be identified as having a measure of success below a threshold, among a lower percentile of success measures, and/or any of the other criteria discussed herein. The identification is optionally based on statistical or correlation analysis. An identified node may be part of several conversations, each conversation represented by a different path through the knowledge graph.

In a Select Expert Step 525 one or more experts are selected for review of the nodes identified in Identify Nodes Step 520. The selection of experts is optionally performed using Routing Logic 165, and can be performed on any of the selection criteria discussed for expert selection discussed elsewhere herein.

In a Provide Step 530, the experts selected in Select Expert Step 525 are provided with conversations (or parts thereof) within which the nodes identified in Identify Nodes Step 520 resulted in poor measures of success. Optionally, the experts are also provided with customer metadata, alternative statements, statements/edges not selected at a particular node. In some embodiments, experts are provided with conversations that included the identified nodes, but had a favorable measure of success, for the purposes of comparison. Provide Sep 530 is optionally performed using one of Expert Devices 115 and Network 120.

In some embodiments, experts are presented with opportunities to indicate their preferences between various alternative statements and/or knowledge graph structures. For example, Healing Logic 187 may be configured to present experts with a query: "Which of the following statements are best suited in this conversation?" By querying an appropriate number of experts with a combination of statements, a statistically meaningful preference may be identified. Filtering Logic 117 is optionally used to remove confidential or personally identifiable data from the statements before the statements are shown to experts.

In a Receive Update Step 535 an update to the one or more identified nodes is received. This update may be based on one or more evaluation made by the experts in response to the conversations, etc. provided in Provide Sep 530. As noted herein, this update may be selected based on a consensus of experts and/or may be in response to changing circumstances for which the knowledge graph is used, e.g., a new product or a new issue.

In an Update Step 540 the received update is used to update the knowledge graph. This update can include replacing node contents (e.g., statements), re-training a machine learning system associated with a node, adding nodes, removing nodes, changing node edges, and/or the like. For example, in some embodiments, Update Step 540 includes changing (moving, adding or deleting) Exit Edges 250 from a node such that they lead to different statements, and then re-training a machine learning system associated with the node to select from among the changed edges as described elsewhere herein. Update Step 540 is optionally performed using Updating Logic 177.

FIG. 6 illustrates methods of communicating using an automated virtual agent, according to various embodiments of the invention. The methods are optionally used for processing a customer service inquiry. The methods of FIG. 6 are based on navigation of the knowledge graph discussed herein. The use of a knowledge graph allows for the automated resolution of customer issue in a conversational mode. As noted elsewhere herein, the approach can be applied to automated conversations in areas other than customer support. A result of the methods of FIG. 6 is the creation of a conversation including ordered statements (e.g., messages) between the customer or other entity and an automated response management system.

In a Receive Inquiry Step 610, a customer service inquiry/statement is received, optionally via I/O 135. The statement may include a message from a customer as well as related metadata. For example, a request may be related to how to use a product and the metadata may identify the product and the user. The customer service inquiry may be the first statement of a conversation. In alternative embodiments, the received inquiry/statement is for a purpose other than customer service.

In a Parse Step 620, the received statement is parsed to determine message subject matter, intent, and/or grammatical objects within the statement. Parse Step 620 is optionally performed using Parsing Logic 140 and can include natural language processing of text and/or audio within the received message. In some embodiments, Parse Step 620 can include analysis of the contents of an image or video. In some embodiments, Parse Step 620 includes identification and extraction from the inquiry of extended markup language (XML), hypertext markup language (HTML), metadata, commands, serial number, model numbers, location data, account data, device state data, and/or the like. For example, the statement may include state data regarding Client Device 110A.

In an Assign Step 630, the statement is assigned to a cluster of customer statements and the node of the knowledge graph representing that cluster. Typically, the assignment is based on the information determined in Parse Step 620. On the first execution of Assign Step 630 in a conversation, the assigned cluster is typically a top-level cluster within the knowledge graph. For example, an inquiry including a request to purchase a product may be assigned to a cluster of such requests. Specifically, a statement included in an inquiry regarding purchase of clothing may be assigned to a corresponding Top-Level Node 210A of Knowledge Graph 200.

On subsequent execution of Assign Step 630, the assigned cluster is one of a plurality of alternative clusters associated with exit edges within the current node of the knowledge graph. As discussed elsewhere herein, assignment of a statement to a cluster is optionally further based on a wide variety of information, including identities of one or more clusters previously navigated in creation of the conversation, e.g., on a state of the conversation. Assign Step 620 is optionally performed using Cluster Logic 127 as discussed with respect to FIG. 2B.

In a Navigate Step 640, the knowledge graph is navigated along an exit edge to a subsequent node, the selection of the exit edge being based on the cluster assignment of Assign Step 630. The subsequent node then becomes a new current node. In some embodiments, a particular node can be visited more than once in a conversation. Navigation along the exit edge from the current node/cluster to the next node/cluster can include, for example: 1) navigating from a top-level node to an intermediate node, or 2) navigating from an intermediate node to a leaf node. Navigate Step 640 is optionally performed using Response Logic 183.

In an Extract Step 650, a responsive message, e.g., Statement 260, is extracted from the new current node and in a Provide Step 660, the responsive statement is provided to the customer in response to the statement received in Inquiry Step 610 or statement received in a Receive Statement Step 670. Often, the responsive statement is configured to facilitate identification of a next node/cluster to be navigated to. This results in a conversation of ordered statements between the customer and an automated response management system, e.g., Response Management System 105.

In an optional Filter Step 665, Filtering Logic 117 is used to filter communications between the customer and the response management system. In some embodiments, this filtering is predictive and may be configured to prevent private and/or sensitive information from being received by the responsive management system. For example, if it is known that a particular node is likely to result in a customer sending personal medical information to Response Management System 105, then the conversation may be passed to a human agent at Contact Center 125 before the personal medical information is sent. In some embodiments, the agent at Contact Center 125 can pass the conversation back to Response Management System 105 to continue the conversation following the exchange of private or sensitive information.

In Receive Statement Step 670, another statement is received from the customer. Steps 620-670 can then be repeated to generate a customer support conversation. The received statement is optionally in response to a Statement 260 being sent to the customer from the current node in Provide Step 660.

In an optional Determine Failure Step 675, it may be determined that the received customer message cannot be associated with any of the alternative clusters or Exit Edges 250 connected to the current node, with at least a minimum level of confidence. Alternatively, it may be determined that a message is not being properly assigned based on customer response or failure to resolve a customer inquiry. Both of these cases represent failures of the automated response process and will result in a poor measure of success. In some embodiments, if a failure occurs, Response Logic 183 is configured to backtrack up nodes of the knowledge graph an attempt to restart a conversation from a prior node. A statement may be provided to a customer asking if they would like to return to a prior point in the conversation and/or provide different responses. For example, a statement including "I'm confused, would you like to return to any of the previous points in our conversation listed below?" may be provided to a customer.

In an optional Provide Step 680, in response to Determine Failure Step 675, the ordered messages of the conversation between the automated response management system and the customer are sent to a human expert. Optionally the human expert has been identified using Routing Logic 165 and/or is associated with a relevant cluster/node of the knowledge graph. The human expert may then engage with the customer in real-time to resolve their needs.

In an optional Receive Update Step 685, an update to the knowledge graph is received from the human expert of Provide Step 680. This update can include, for example, an updated responsive statement to be associated with one or more clusters/nodes of the knowledge graph; a change in a path with the knowledge graph; addition or elimination of a cluster/node; or change to any other aspect of the knowledge graph. A change in a path (edge) within the knowledge graph can be based on 1) the updated responsive statement, 2) on the determination that the responsive statement is inadequate, 3) the failure to resolve a customer inquiry, feedback from an expert, and/or the like. Receive Update Step 680 is optionally an embodiment of Receive Update Step 535.

The methods illustrated in FIGs. 4, 5, and/or 6 are optionally performed together in various combinations of steps.

Several embodiments are specifically illustrated and/or described herein. However, it will be appreciated that modifications and variations are covered by the above teachings and within the scope of the appended claims without departing from the spirit and intended scope thereof. For example, customer support content can include video, images, chat bots, and other media. The systems and methods discussed herein may be applied to technical service, sales service, advice, reviews, geographic directions, assembly directions, customer service, and/or the like.

While the examples presented herein are focused primarily on conversations regarding customer service and/or including customer service inquiries, it will be understood that the teachings of this specification are applicable to other automated conversations and/or virtual agents. For example, the teachings may be used to communicate with or between various communication enabled products, a smartphone, a vehicle, an automated home appliance, an Internet of Things device, an entertainment device, appliances, a modem, heating and cooling systems, an access control system, and/or the like.

The examples presented herein are focused primarily on conversations that include of sequence of statements between two, three or more parties/entities, it will be understood that the teachings of this specification are applicable to situations in which statements include data other than text or audio messages. For example, the systems discussed herein may be used as part of an application programming interface (API) and/or to communicate with an API. In a specific example, a conversation can include an automated sequence of statements between a support server and a human customer and also an automated sequence of statements between the support server and a device of the customer. These two sequences are optionally interleaved. A conversation can include a sequence of statements communicated between two computing devices and/or between more than three entities.

The embodiments discussed herein are illustrative of the present invention. As these embodiments of the present invention are described with reference to illustrations, various modifications or adaptations of the methods and or specific structures described may become apparent to those skilled in the art. All such modifications, adaptations, or variations that rely upon the teachings of the present invention, and through which these teachings have advanced the art, are considered to be within the spirit and scope of the present invention. Hence, these descriptions and drawings should not be considered in a limiting sense, as it is understood that the present invention is in no way limited to only the embodiments illustrated.

Computing systems referred to herein can comprise an integrated circuit, a microprocessor, a personal computer, a server, a distributed computing system, a communication device, a network device, or the like, and various combinations of the same. A computing system may also comprise volatile and/or non-volatile memory such as random access memory (RAM), dynamic random access memory (DRAM), static random access memory (SRAM), magnetic media, optical media, nano-media, a hard drive, a compact disk, a digital versatile disc (DVD), and/or other devices configured for storing analog or digital information, such as in a database. The various examples of logic noted above can comprise hardware, firmware, or software stored on a computer-readable medium, or combinations thereof. A computer-readable medium, as used herein, expressly excludes paper. Computer-implemented steps of the methods noted herein can comprise a set of instructions stored on a computer -readable medium that when executed cause the computing system to perform the steps. A computing system programmed to perform particular functions pursuant to instructions from program software is a special purpose computing system for performing those particular functions. Data that is manipulated by a special purpose computing system while performing those particular functions is at least electronically saved in buffers of the computing system, physically changing the special purpose computing system from one state to the next with each change to the stored data.

Any of the logic discussed herein may include hardware, firmware and/or software stored on a non-transient computer readable medium. This logic may be implemented in an electronic device, e.g., circuits, to produce a special purpose computing system.

Generally herein, issues relating to the setup and maintenance of virtual agents have been, to a substantial degree, resolved through the use of a dynamically adaptable knowledge graph. The knowledge graph is rapidly produced by organizing conversation statements into a multi-level hierarchy of clusters. Each of these clusters is associated with a node of the knowledge graph, and edges between the nodes represent the orders in which statements may be made in a conversation with a virtual agent. Maintenance and refinement of the knowledge graph is greatly simplified by monitoring virtual agent performance at a node specific level and employing human agents to moderate changes at individual nodes. With this approach, the performance of a virtual agent can be constantly improved by targeted human intervention. The virtual agent can even adapt in real-time to changing conditions and needs. For example, nodes of the knowledge graph may be quickly and automatically adapted to the introduction of a new product or discovery of a new customer issue. As is discussed further herein, a substantial improvement in the generation, maintenance and performance of virtual agents is achieved through a judicious and groundbreaking combination of machine learning and human augmentation.

## Claims

1. A customer support system (100) comprising:
an I/O (135) to receive statements (270) from a customer and to send responsive statements (260) to the customer;
storage (137) configured to store a knowledge graph (200) and a conversation, the current conversation including statements (260, 270) received from and sent to one or more customers, the knowledge graph (200) including a plurality of nodes (210A-D, 220A-M, 230A-F) and edges (240, 250) connecting the nodes (210A-D, 220A-M, 230A-F), each node or each intermediate node (210A-D, 220A-M, 230A-F) of the knowledge graph (200) being associated with a statement (260) and one or more edges (240, 250) configured to navigate between the nodes (210A-D, 220A-M, 230A-F);
response logic (183) configured to generate the conversation between the customer and the customer support system (100), the conversation being based on navigation of the knowledge graph (200) in response to statements (270) received from the customer;
scoring logic (160) configured to generate a measure of success of the conversation, the measure of success being associated with a node or group of nodes (210A-D, 220A-M, 230A-F) of the knowledge graph (200);
evaluation logic (174) configured to send the node or group of nodes (210A-D, 220A-M, 230A-F) associated with the measure of success to a human expert, responsive to the measure of success;
updating logic (177) configured to receive an update to the knowledge graph (200) from the human expert and to update the knowledge graph (200) using the node update such that at least one member of a set of responsive statements (270) associated with the node or group of nodes (210A-D, 220A-M, 230A-F) being provided by a human expert and at least one member of the set of responsive statements (270) being received from a historical conversation; and
a processor (192) configured to execute at least the scoring logic (160), evaluation logic (174) or updating logic (177).

2. The system of claim 1, further comprising cluster logic (127) configured to identify multi-level clusters of statements (260, 270) requiring similar responses within a plurality of historical conversations, wherein the knowledge graph (200) is based on the identified clusters of statements (260, 270) and the historical conversations, each of the clusters represented by a node (210A-D, 220A-M, 230A-F) of the knowledge graph (200).

3. The system of claim 1 or 2, wherein the measure of success for the conversation is based on a sale of a product or service, a customer survey, a length of the conversation, a time to next contact with a customer of the conversation or one or more statements (270) received from the customer during the conversation.

4. The system of claim 1, 2 or 3, further comprising graph generation logic (170) configured to generate a knowledge graph (200) based on the identified clusters of statements (260, 270) and the historical conversations, wherein the graph generation logic (170) is configured to generate the knowledge graph (200) based on a subset of the historical conversations, the subset including those conversations having measures of success above a threshold and in particular having common intent.

5. The system of any of the preceding claims, wherein the plurality of nodes (210A-D, 220A-M, 230A-F) are each associated with a statement (260) to be sent to customer and each associated with one or more exit edges (250) to be selected based on a responsive statement (270) to be received from the customer, each of the exit edges (250) leading to a different node (210A-D, 220A-M, 230A-F) of the knowledge graph (200), wherein in particular each of the exits edges (250) being associated with one of a plurality of responsive statements (270) or clusters thereof.

6. The system of any of the preceding claims, wherein the response logic (183) is configured to select an edge (250) associated with responsive statement (270) to provide to a customer, responsive to a most recent statement (270) received from the customer and responsive to a path taken through the knowledge graph (200) in the current conversation.

7. The system of any of the preceding claims, wherein the response logic (183) is configured to determine if a conversation should be transferred from the knowledge graph (200) to an expert.

8. The system of any of the preceding claims, wherein one of the nodes (210A-D, 220A-M, 230A-F) of the knowledge graph (200) is associated with a statement (260) that includes a command configured to control the device of the customer (110A-C), the associated statement (260) being sent from the customer support system (100) to the device of the customer (110A-C).

9. The system of any of the preceding claims, wherein one or more of the nodes (210A-D, 220A-M, 230A-F) of the knowledge graph (200) is associated with a local neural network (120) configured to select a responsive statement (260) from a predetermined set of responsive statements (260) associated with a particular member of the one or more nodes (210A-D, 220A-M, 230A-F), the selection being based on a statement (270) received from the customer, the selected responsive statement (260) being sent to the customer in response to the received statement (270) as part of conversation generation by the response logic (183).

10. The system of any of the preceding claims, wherein at least one of the nodes (210A-D, 220A-M, 230A-F) of the knowledge graph (200) is associated with one or more responsive statements (270) provided by or improved by the human expert.

11. The system of any of the preceding claims, wherein the scoring logic (160) is configured to generate a measure of success for snippet of a conversation represented by less than 50% of the statements (260, 270) in the conversation.

12. The system of any of the preceding claims, wherein the scoring logic (160) is configured to generate relative success measures of different responsive statements (270) associated with a particular node (210A-D, 220A-M, 230A-F) of the knowledge graph (200).

13. The system of any of the preceding claims, wherein the evaluation logic (174) is configured to send the node or group of nodes (210A-D, 220A-M, 230A-F) to the human expert if the measure of success of the node or group of nodes (210A-D, 220AM, 230A-F) is below a predetermined threshold, is below an average, median or other statistical measure of success, or changes significantly from an expected measure of success for the node or group of nodes (210A-D, 220A-M, 230A-F).

14. The system of any of the preceding claims, wherein the evaluation logic (174) is configured to request that the human expert select between a plurality of alternative responsive statements (270) to be assigned to a node (210A-D, 220A-M, 230A-F) of the knowledge graph (200).

15. The system of any of the preceding claims, wherein the evaluation logic (174) is configured to provide a current conversation to the expert and to receive a responsive statement (270) from the human expert, the responsive statement (270) being responsive to a customer statement of the current conversation, and wherein the updating logic (177) is configured to use the node update received from the human expert to replace a responsive statement (270) associated with a node (210A-D, 220A-M, 230A-F), to add an additional responsive statement (270) to a node (210A-D, 220A-M, 230A-F), to create a new node (210A-D, 220A-M, 230A-F) of the knowledge graph (200), establish a new edge (240, 250) between nodes (210A-D, 220A-M, 230A-F), or to move an edge (240, 250) of the knowledge graph (200).

16. The system of any of the preceding claims, wherein the updating logic (177) is configured to update a responsive statement (270) of a node based on a consensus among human experts.
